# EUROPEAN PATENT APPLICATION

(11) **EP 2 270 999 A1**
(43) Date of publication of application: **05.01.2011**
(21) Application number: 09734243.0
(22) Date of filing: 23.04.2009
(51) Int. Cl.: H04B 3/54

(54) **COMMUNICATION TERMINAL DEVICE AND COMMUNICATION METHOD**

(30) Priority: 25.04.2008 JP 2008115684
(71) Applicant: Panasonic Corporation, Kadoma-shi Osaka 571-8501 (JP)
(72) Inventor: MATSUSHITA, Yosuke, 2-1-61, Shiromo, Chuo-ku Osaka 540-6207 (JP); FUJIWARA, Yuki, 2-1-61, Shiromo, Chuo-ku Osaka 540-6207 (JP); HOMMA; Hideki, 2-1-61, Shiromo, Chuo-ku Osaka 540-6207 (JP); MORITA, Naoki, 2-1-61, Shiromo, Chuo-ku Osaka 540-6207 (JP); URABE, Yoshio, 2-1-61, Shiromo, Chuo-ku Osaka 540-6207 (JP)
(74) Representative: Gassner, Wolfgang
(86) International application number: PCT/JP2009/001861
(87) International publication number: WO 2009/130905

(57) **Abstract**

Provided is a communication terminal device that reduces, in a network using a power line, the percentage of bands consumed for transmission of control packets in the bands consumed for all the communication, so as to ensure transmission of data intended to be transmitted. A PLC terminal F701 connected to the network of power line communication transmits, when having determined that the terminal does not receive from the network a beacon for a predetermined period of time, a beacon request packet to the network, using a modulation method having the lowest communication speed among the modulation methods that can be used in the network.

## Description

### Technical Field

The present invention relates to a communication terminal device and a communication method that use a power line as a communication channel.

### Background Art

In the field of wireless communication, a moving terminal detects, when receiving a beacon transmitted from a base station, that the moving terminal is in a range which allows communication with the base station. A beacon in the field of wireless communication is modulated by using a modulation method having the lowest communication speed among a plurality of modulation methods that can be used by the base station. This is because modulation by using the modulation method having the lowest communication speed expands to the maximum extent possible the range which allows communication with the base station. In the case of wireless communication, it is assumed that a moving terminal moves, and thus it is highly possible for the moving terminal to come out of the range which allows communication with the base station. In the communication using a base station, all the communication to be performed by the moving terminals that have received beacons needs to be relayed by the base station. Accordingly, if a moving terminal comes out of the range which allows communication with the base station, the moving terminal can no longer perform communication. Therefore, the base station modulates a beacon, using the modulation method having the lowest communication speed, and expands to the maximum extent possible the range which allows communication with the base station, thereby reducing the probability that the moving terminal comes, due to the movement thereof, out of the range which allows communication with the base station.

Further, in a wireless network, there also is an ad hoc wireless network in which terminals function as relay terminals, thereby enabling, without using a base station, other terminals existing in a specific range from the relay terminals to perform data communication with the relay terminals. In the ad hoc wireless network, terminals perform relays with each other, thereby realizing a wider range of communication, compared with the case where one base station is used. However, in the ad hoc wireless network, different from the communication using a base station, the terminals functioning as relay terminals are not specified. Accordingly, in order to perform data communication between two terminals, it is necessary to specify, as a relay terminal, a terminal which is appropriate to relay the data to all the other terminals existing within a specific range from the relay terminal.

Methods for exchanging control information for specifying a relay terminal are classified into two methods: a proactive method that periodically exchanges control information (for example, see Non-Patent Literatures 1 and 2) and a reactive method that exchanges control information at the time of initiation of data communication (for example, see Non-Patent Literatures 3 and 4). Generally, it is said that the proactive method is effective when a terminal is moving at a low speed and the reactive method is effective when a terminal is moving at a high speed.

### Citation List

### Non Patent Literature

Non-Patent Literature 1: REQUEST FOR COMMENT 3626: Optimized Link State Routing Protocol (OLSR)
Non-Patent Literature 2: REQUEST FOR COMMENT 3684: Topology Dissemination Based on Reverse-Path Forwarding (TBRPF)
Non-Patent Literature 3: REQUEST FOR COMMENT 3561: Ad hoc On-Demand Distance Vector (AODV) Routing
Non-Patent Literature 4: REQUEST FOR COMMENT 4728: The Dynamic Source Routing (DSR) Protocol for Mobile Ad Hoc Networks for IPv4

### Summary of Invention

### Technical Problem

However, when the above-described conventional art is applied to power line communication that uses a power line as a communication channel, the following problem arises.

Since it is assumed that the conventional art is used in wireless communication, a beacon is transmitted from a relay terminal by using a modulation method having a lowest communication speed, as in the case of the beacon in the communication using a base station. This is performed in order to prevent a terminal from becoming unable to communicate due to the movement thereof. However, a PLC (Power Line Communication) terminal using a power line as a communication channel is a terminal which does not move. Accordingly, a control packet to be transmitted to a slave device by a relay device existing in a network of power line communication need not, in order to expand to the maximum extent possible the range which allows communication with the relay device, to be modulated by using a modulation method having the lowest communication speed among a plurality of modulation methods that can be used by the relay device. Rather, there is a problem that since an ad hoc network includes a plurality of relay devices that output control packets, if control packets each modulated by using a modulation method having a lowest communication speed are transmitted, more bands are consumed, in the whole network, for transmitting the control packets, thereby reducing the bands that can be used for transmitting data that is intended to be transmitted.

Therefore, in view of the problem described above, an object of the present invention is to provide a communication terminal device and a communication method that allow, in an ad hoc network using a power line, a great reduction of the percentage of the bands consumed for transmission of control packets in the bands consumed for all the communication, and to ensure the transmission of data intended to be transmitted.

### Solution to Problem

In order to solve the problem described above, a communication terminal device of an embodiment of the present invention modulates, when not receiving from the network for a predetermined period of time a request packet for requesting a control packet to be used for setting a communication path to a terminal on a network of power line communication, a request packet for the control packet, using a modulation method having the lowest communication speed among the modulation methods that can be used in the network, and transmits the modulated request packet to the network.

A communication terminal device according to a first embodiment includes: a communication section connected to a network of power line communication; and a control section that modulates, in a case where a control packet to be used for setting a communication path to a terminal on the network is not received from the network for a predetermined period of time, a request packet for the control packet, using a modulation method having a lowest communication speed among a plurality of modulation methods that can be used in the network, and transmits the modulated request packet to the network.

According to the present embodiment, in a case where a control packet to be used for setting a communication path to a terminal on the network is not received from the network for a predetermined period of time, a request packet for the control packet is modulated by using a modulation method having a lowest communication speed among a plurality of modulation methods that can be used in the network, and the modulated request packet is transmitted to the network. Accordingly, even in a case where the communication terminal device comes, due to a change of the state of a communication channel, out of the range that allows communication with a terminal on the network, if a request packet is modulated by using the modulation method having the lowest communication speed among the plurality of modulation methods that can be used in the network, it is possible to expand to the maximum extent possible the range which allows communication of the request packet. As a result, the request packet reaches one of the terminals on the network, thereby enabling a restart of communication with the terminal.

In a communication terminal device according to a second embodiment based on the above embodiment, the case where the control packet is not received from the network for a predetermined period of time includes a time of a startup. According to the present embodiment, the control section transmits a request packet at the time of a startup. Accordingly, even in a case where a communication terminal device is newly included in the network, if a request packet is modulated by using the modulation method having the lowest communication speed among the plurality of modulation methods that can be used in the network, it is possible to expand to the maximum extent possible the range which allows communication of the request packet. As a result, the request packet reaches one of the terminals on the network, thereby enabling a start of communication with the terminal.

In a communication terminal device according to a third embodiment based on the above embodiment, the control section receives, from a first terminal that has responded to the request packet, a control packet that has been modulated by using a modulation method having a highest communication speed that can be used between the communication terminal device and the first terminal.

According to the present embodiment, between the communication terminal device and the first terminal which the request packet has reached, by receiving the control packet that has been modulated by using the modulation method having the highest communication speed that can be used between the communication terminal device and the first terminal, it is possible to reduce to the maximum extent possible the range, which allows communication, of the first terminal. Accordingly, it is possible to minimize the overlapping portion between the range, which allows communication, of the first terminal and the range, which allows communication, of another terminal, and therefore, to minimize the range in which a control packet is transmitted from the first terminal. As a result, it is possible to reduce the probability that control packets overlap with each other in the whole network, thereby enabling prevention of needless increase in the percentage of the bands consumed for transmission of control packets in the bands consumed for all the communication.

In a communication terminal device according to a fourth embodiment based on the above embodiment, in a case where, during a time period when the control packet is received from the first terminal, a control packet that has been modulated by using a modulation method having a different communication speed than the modulation method having the highest communication speed that can be used between the communication terminal device and the first terminal, is received from a second terminal, the control section switches a transmission source of the control packet, from the first terminal to the second terminal.

According to the present embodiment, in a case where, during a time period when the control packet is received from the first terminal, a control packet that has been modulated by using a modulation method having a different communication speed than the modulation method having the highest communication speed that can be used between the communication terminal device and the first terminal, is received from a second terminal, the control section switches a transmission source of the control packet, from the first terminal to the second terminal. Accordingly, in a case where there exists a second terminal that modulates a control packet by using a modulation method having a lower communication speed, the communication range of the second terminal is larger than the communication range of the first terminal. This enables more terminals to receive a control packet from the second terminal, and if the second terminal being the transmission source of the control packet to be received by the more terminals is selected, it is possible to reduce the number of transmission bodies of control packets. As a result, it is possible to effectively reduce the percentage of the bands consumed for transmission of control packets in the bands consumed for all the communication.

Further, in a case where there exists a second terminal that modulates a control packet by using a modulation method having a lower communication speed, the communication range of the control packet transmitted from the second terminal is smaller than the communication range of the control packet transmitted from the first terminal. Accordingly, if the second terminal having the smaller communication range of the control packet is selected, it is possible to reduce the number of transmission bodies of control packets and to reduce the communication ranges of beacons in the whole network. As a result, it is possible to effectively reduce the percentage of the bands consumed for transmission of control packets in the bands consumed for all the communication.

In a communication terminal device according to a fifth embodiment based on the above embodiment, when switching the transmission source of the control packet, from the first terminal to the second terminal, the control section notifies the first terminal of the switching of the transmission source of the control packet. According to the present embodiment, when switching the transmission source of the control packet, from the first terminal to the second terminal, the control section notifies the first terminal of the switching of the transmission source of the control packet, whereby the first terminal being the transmission source of the control packet can perform processing such as stopping the transmission of the control packet in accordance with the notification. Accordingly, it is possible to reduce the number of transmission bodies of control packets, and as a result, it is possible to effectively reduce the percentage of the bands consumed for transmission of control packets in the bands consumed for all the communication.

In a communication terminal device according to a sixth embodiment based on the above embodiment, in a case where the first terminal is notified of the switching of the transmission source of the control packet and has another terminal being a transmission destination of the control packet, the first terminal modulates the control packet, using a modulation method having a highest communication speed that can be used between the first terminal and the other terminal, and transmits the modulated control packet to the other terminal.

According to the present embodiment, in a case where the first terminal is notified of the switching of the transmission source of the control packet and has another terminal being a transmission destination of the control packet, the first terminal modulates the control packet, using a modulation method having a highest communication speed that can be used between the first terminal and the other terminal, and transmits the modulated control packet to the other terminal. Accordingly, it is possible to reduce the communication range of the first terminal to the minimum range that can include the other terminal. Therefore, it is possible to minimize the overlapping portion between the communication range of the first terminal and the communication range of the second terminal, thereby enabling prevention of needless increase in the percentage of the bands consumed for transmission of control packets in the bands consumed for all the communication. As a result, it is possible to effectively secure the bands that are to be consumed for transmitting data intended to be transmitted.

In a communication terminal device according to a seventh embodiment based on the above embodiment, in a case where the first terminal is notified of the switching of the transmission source of the control packet and has no other terminal being a transmission destination of the control packet, the first terminal stops transmitting the control packet.

According to the present embodiment, in a case where the first terminal is notified of the switching of the transmission source of the control packet and has no other terminal being a transmission destination of the control packet, the first terminal stops transmitting the control packet. Accordingly, the communication range of the control packet provided by the first terminal disappears, and thus the overlapping portion between the communication range of the first terminal and the communication range of the second terminal disappears, thereby enabling prevention of needless increase in the percentage of the bands consumed for transmission of control packets in the bands consumed for all the communication. As a result, it is possible to effectively secure the bands that are to be consumed for transmitting data intended to be transmitted.

In a communication terminal device according to an eighth embodiment based on the above embodiment, in a case where after the control packet is received from the second terminal, a control packet is not received for a predetermined period of time, the control section modulates a request packet, using the modulation method having the lowest communication speed among the plurality of modulation methods that can be used in the network, and transmits the modulated request packet to the network.

According to the present embodiment, in a case where after the control packet is received from the second terminal, a control packet is not received for a predetermined period of time, the control section modulates a request packet, using the modulation method having the lowest communication speed among the plurality of modulation methods that can be used in the network, and transmits the modulated request packet to the network. Accordingly, in a case where a control packet from the second terminal, with which communication has been performed, is not received due to a change of the state of a communication channel, a request packet is modulated by using the modulation method having the lowest communication speed among a plurality of modulation methods that can be used in the network, and therefore, it is possible to expand to the maximum extent possible the range which allows communication of the request packet. As a result, the request packet reaches one of the terminals on the network, thereby enabling a restart of communication with the terminal and reincorporation of, into the network, the communication terminal device whose communication with the second terminal has been stopped.

In a communication terminal device according to a ninth embodiment based on the above embodiment, information about the communication path to the terminal on the network includes at least one of: information indicating a relay device; path information indicating which path via the relay device allows a connection to a master device; and path information indicating which path via the relay device allows a connection to another terminal on the network.

In a communication terminal device according to a tenth embodiment based on the above embodiment, the control packet that has been modulated by using the modulation method having the lowest communication speed among the modulation methods that can be used in the network is a broadcast packet, and the control packet that has been modulated by using the modulation method having the highest communication speed that can be used between the communication terminal device and the first terminal is a unicast packet.

According to the present embodiment, the control packet that has been modulated by using the modulation method having the lowest communication speed is transmitted as a broadcast packet. On the other hand, the control packet that has been modulated by using the modulation method having the highest communication speed that can be used between the communication terminal device and the first terminal is transmitted as a unicast packet. Accordingly, broadcast packets are modulated by using a modulation method having the lowest communication speed among the modulation methods that can be used in the network, and thus it is possible to substantially increase the communication speed of a control packet even in a system that does not allow an increase of the communication speed. As a result, it is possible to reduce, to the maximum extent possible, the range in which the control packet is transmitted from the first terminal to the terminal that is currently communicating with the first terminal.

In a communication terminal device according to an eleventh embodiment based on the above embodiment, the control packet that has been modulated by using the modulation method having the highest communication speed that can be used between the communication terminal device and the first terminal is a broadcast packet, and the control packet that has been modulated by using the modulation method having the lower communication speed than the modulation method having the highest communication speed that can be used between the communication terminal device and the first terminal, the control packet being received from the second terminal, is a broadcast packet.

According to the present embodiment, even in a case where a broadcast packet is used as a control packet, the broadcast packet is not modulated by using a modulation method having the lowest communication speed. Instead, the communication speed of the control packet to be transmitted from the first terminal and the communication speed of the control packet to be transmitted from the second terminal are changed. Accordingly, it is possible to reduce to the maximum extent possible, relative to the second terminal, the range in which the control packet is transmitted from the first terminal.

In a communication terminal device according to a twelfth embodiment based on the above embodiment, the control packet that has been modulated by using the modulation method having the highest communication speed that can be used between the communication terminal device and the first terminal is a unicast packet; and the control packet that has been modulated by using the modulation method having the lower communication speed than the modulation method having the highest communication speed that can be used between the communication terminal device and the first terminal, the control packet being received from the second terminal, is a broadcast packet.

According to the present embodiment, the control packet that has been modulated by using the modulation method having the highest communication speed that can be used between the communication terminal device and the first terminal is a unicast packet. On the other hand, the control packet that has been modulated by using a modulation method having a lower communication speed than the modulation method having the highest communication speed that can be used between the communication terminal device and the first terminal, the control packet being received from the second terminal, is a broadcast packet. Accordingly, broadcast packets are modulated by using a modulation method having the lowest communication speed among the modulation methods that can be used in the network. Therefore, even in a system that does not allow an increase of the communication speed, the communication speed of the control packet to be transmitted from the first terminal can be higher than the communication speed of the control packet to be transmitted from the second terminal. As a result, it is possible to reduce to the maximum extent possible, relative to the second terminal, the range in which the control packet is transmitted from the first terminal.

A communication terminal device of a thirteenth embodiment includes: a communication section that transmits, to a terminal connected to a network of power line communication, a control packet to be used for setting a communication path to the terminal; and a control section that modulates, in a case where a response to the control packet is not received from the terminal for a predetermined period of time, the control packet, using a modulation method having a lowest communication speed among a plurality of modulation methods that can be used in the network, and transmits the modulated control packet to the terminal.

According to the present embodiment, in a case where a response to the control packet is not received from the terminal for a predetermined period of time, the control packet is modulated by using a modulation method having the lowest communication speed among a plurality of modulation methods that can be used in the network, and the modulated control packet is transmitted to the terminal. Accordingly, the transmission terminal of the control packet determines that the reception terminal cannot currently receive the control packet, expands the range which allows communication of the control packet, and retransmits a control packet in such a manner that the reception terminal can receive the control packet. Thus, the control packet reaches the reception terminal, whereby communication with the reception terminal can be resumed.

In a communication terminal device according to a fourteenth embodiment based on the above embodiment, the communication section transmits, by unicast, the control packet to the terminal; and in a case where the response to the control packet is not received from the terminal for a predetermined period of time, the control section modulates the control packet, using the modulation method having the lowest communication speed among the plurality of modulation methods that can be used in the network, and transmits, by broadcast, the modulated control packet to the terminal.

According to the present embodiment, the communication section transmits, by unicast, the control packet to the terminal; and in a case where a response to the control packet is not received from the terminal for a predetermined period of time, the control section transmits, by broadcast, the control packet, using the modulation method having the lowest communication speed among the plurality of modulation methods that can be used in the network. This expands the range which allows communication of the control packet, and thus, the control packet reaches the reception terminal, whereby communication with the reception terminal can be resumed.

In a communication terminal device according to a fifteenth embodiment based on the above embodiment, the case where the response to the control packet is not received from the terminal for a predetermined period of time includes a case where the control section does not receive, from the terminal, a response to the control packet a predetermined number of times. According to the present embodiment, the communication terminal device can also be applied to a case where a response to a control packet is not received from a terminal a predetermined number of times.

A communication method of a sixteenth embodiment includes modulating, in a case where a control packet to be used for setting a communication path to a terminal connected to a network of power line communication is not received from the network for a predetermined period of time, a request packet for the control packet, using a modulation method having a lowest communication speed among a plurality of modulation methods that can be used in the network; and transmitting the modulated request packet to the network.

According to the present embodiment, even in a case where the communication terminal device comes, due to a change of the state of a communication channel, out of the range that allows communication with a terminal on the network, if a request packet is modulated by using the modulation method having the lowest communication speed among the plurality of modulation methods that can be used in the network, it is possible to expand to the maximum extent possible the range which allows communication of the request packet. As a result, the request packet reaches one of the terminals on the network, thereby enabling a start or a restart of communication with the terminal.

### Advantageous Effects of Invention

According to the communication terminal device in the embodiments described above, it is possible, in an ad hoc network using a power line, to greatly reduce the percentage of the bands consumed for transmission of control packets in the bands consumed for all the communication, and to ensure the transmission of data intended to be transmitted.

### Brief Description of Drawings

[FIG. 1] FIG. 1 is a network configuration diagram illustrating a case in which a communication terminal device and a communication method are used according to a first embodiment.
[FIG. 2] FIG. 2 is a diagram illustrating in detail a configuration of a terminal used in the first embodiment.
[FIG. 3] FIG. 3 is a diagram illustrating a packet format used in the first embodiment.
[FIG. 4] FIG. 4 is a functional block diagram illustrating functions performed by a CPU 202 in the first embodiment.
[FIG. 5] FIG. 5 is a network configuration diagram illustrating a state before an entry of a new terminal in the first embodiment.
[FIG. 6] FIG. 6 is a diagram illustrating a beacon tree before the entry of the new terminal in the first embodiment.
[FIG. 7] FIG. 7 is a network configuration diagram illustrating a state after the entry of the new terminal in the first embodiment.
[FIG. 8] FIG. 8 is a diagram illustrating a beacon tree after the entry of the new terminal in the first embodiment.
[FIG. 9] FIG. 9 is a network configuration diagram illustrating a state after a modulation method has been changed in the first embodiment.
[FIG. 10] FIG. 10 is a diagram illustrating a beacon tree after the modulation method has been changed in the first embodiment.
[FIG. 11] FIG. 11 is a network configuration diagram illustrating a state after a relay terminal has been changed in the first embodiment.
[FIG. 12] FIG. 12 is a diagram illustrating a beacon tree after the relay terminal has been changed in the first embodiment.
[FIG. 13] FIG. 13 is a sequence diagram illustrating a transition of the state from FIG. 5 to FIG. 12 in the first embodiment.
[FIG. 14] FIG. 14 is a diagram illustrating band utilization efficiencies in the first embodiment.
[FIG. 15] FIG. 15 is a flowchart showing beacon reception processing in the first embodiment.
[FIG. 16] FIG. 16 is a flowchart showing beacon transmission processing in the first embodiment.
[FIG. 17] FIG. 17 is a network configuration diagram illustrating a state before an entry of a noise source in a second embodiment.
[FIG. 18] FIG. 18 is a diagram illustrating a beacon tree before the entry of the noise source in the second embodiment.
[FIG. 19] FIG. 19 is a network configuration diagram illustrating a state after the entry of the noise source in the second embodiment.
[FIG. 20] FIG. 20 is a diagram illustrating a beacon tree after the entry of the noise source in the second embodiment.
[FIG. 21] FIG. 21 is a network configuration diagram illustrating a state after a modulation method has been changed in the second embodiment.
[FIG. 22] FIG. 22 is a network configuration diagram illustrating a state after a relay terminal has been changed in the second embodiment.
[FIG. 23] FIG. 23 is a diagram illustrating a beacon tree after the relay terminal has been changed in the second embodiment.
[FIG. 24] FIG. 24 is a network configuration diagram illustrating a state after the noise source has been removed in the second embodiment.
[FIG. 25] FIG. 25 is a sequence diagram illustrating a transition of the state from FIG. 17 to FIG. 24 in the second embodiment.
[FIG. 26] FIG. 26 is a diagram illustrating band utilization efficiencies in the second embodiment.
[FIG. 27A] FIG. 27A is a flowchart showing beacon reception processing in the second embodiment.
[FIG. 27B] FIG. 27B is a flowchart showing beacon reception processing in the second embodiment.
[FIG. 28] FIG. 28 is a functional block diagram illustrating functions performed by the CPU 202 in a third embodiment.
[FIG. 29] FIG. 29 is a network configuration diagram illustrating a state before an entry of a noise source in the third embodiment.
[FIG. 30] FIG. 30 is a network configuration diagram illustrating a state after the entry of the noise source in the third embodiment.
[FIG. 31] FIG. 31 is a network configuration diagram illustrating a state after a destination address has been changed in the third embodiment.
[FIG. 32] FIG. 32 is a network configuration diagram illustrating a state after a relay terminal has been changed in the third embodiment.
[FIG. 33] FIG. 33 is a sequence diagram illustrating a transition of the state from FIG. 29 to FIG. 32 in the third embodiment.
[FIG. 34] FIG. 34 is a diagram illustrating band utilization efficiencies in the third embodiment.
[FIG. 35] FIG. 35 is a flowchart showing beacon transmission processing in the third embodiment.

### Description of Embodiments

### (First Embodiment)

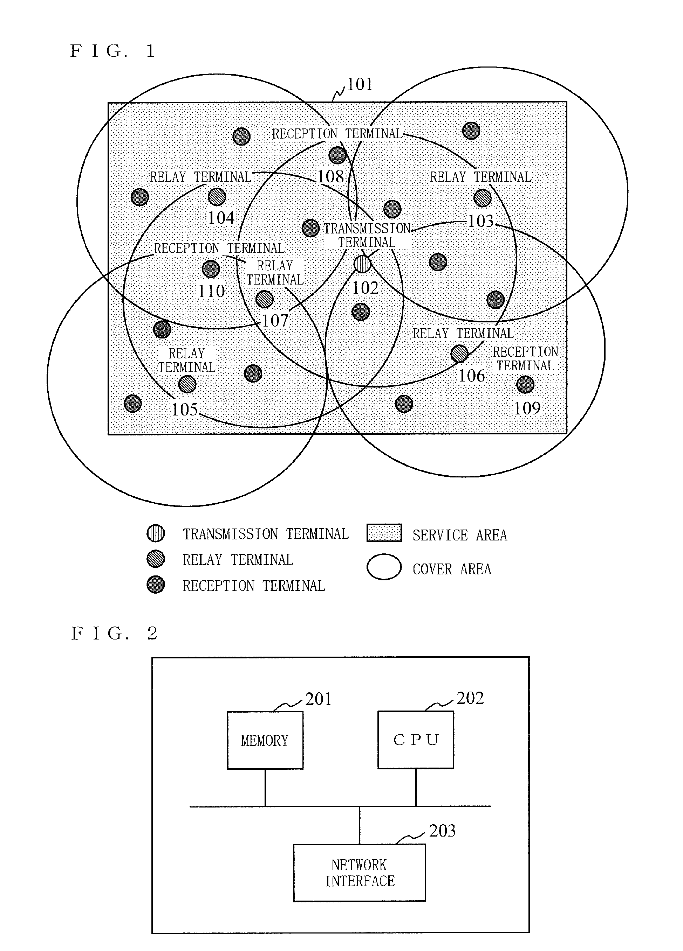

FIG. 1 is a network configuration diagram illustrating a case in which communication terminal devices and a communication method are used according to a first embodiment. The network is a PLC network. A service area 101 of the network, which is larger than the cover area of respective terminals existing in the network, constitutes an ad hoc network in which the respective terminals communicate with each other via relay terminals 103 to 107. Each of all the terminals in the service area 101 (including reception terminals 108 to 110) receives, via at least one of the relay terminals 103 to 107, a path information packet periodically transmitted from a transmission terminal 102, thereby knowing which terminal to select, as a relay terminal, to perform communication. Note that, the path information packet is a control packet to be used for setting a communication path between terminals on a network, and is similar to a beacon in the field of wireless communication. Also, it is assumed that the path information packet includes information indicating which speed allows communication between the terminals.

FIG. 2 is a diagram illustrating in detail a configuration of each terminal. In FIG. 2, each terminal includes a memory 201 that includes various kinds of control programs and work areas, a CPU 202 that controls the whole terminal, and a network interface 203 that is connected to a power line and transmits various data via the power line. Each terminal causes the CPU 202 to execute a program stored in the memory 201, transmits data via the network interface 203, and causes the CPU 202 to decode data received via the network interface 203. The CPU 202 may be referred to as a control section since the CPU 202 controls the whole terminal, and the network interface 203, as a communication section since the network interface 203 is in charge of the communication of the whole terminal.

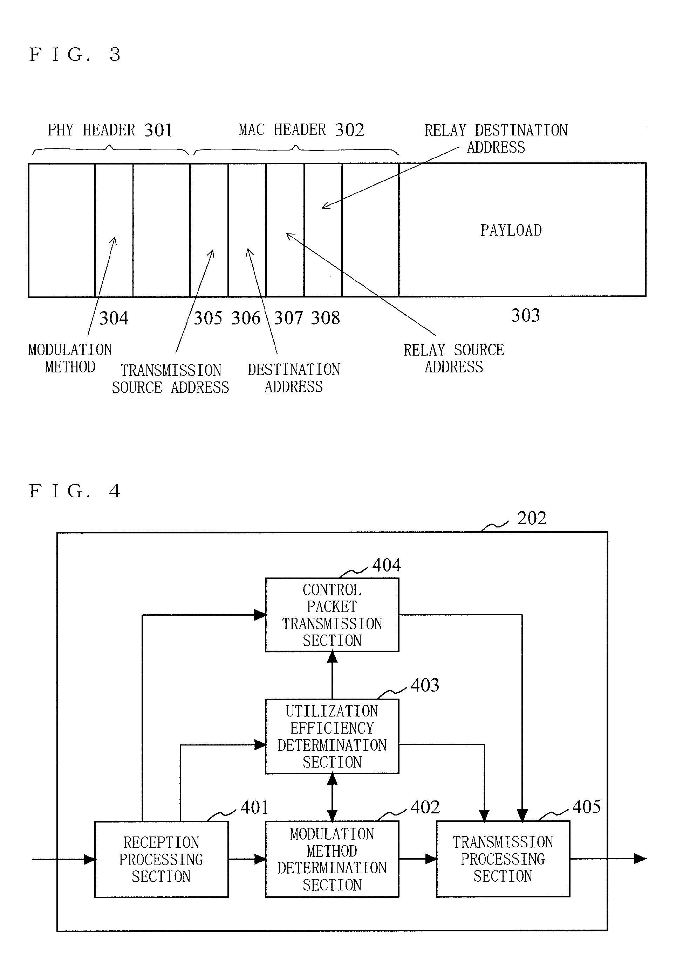

FIG. 3 illustrates a packet format used in an ad hoc network to which the present invention is applied. The packet format includes a PHY header 301, a MAC header 302, and a payload 303. The payload 303 also includes a header of an upper layer. The PHY header 301 includes a field 304 in which a modulation method for the packet is described. Each terminal reads the PHY header 301 so as to determine whether or not the terminal itself can receive the packet. The MAC header 302 includes a field in which addresses of a transmission source, a destination, a relay source, and a relay destination are described. In this example, in the path information packet to be transmitted from the transmission terminal 102, the address of the transmission terminal 102 is set as a transmission source address 305, and ff:ff:ff:ff:ff:ff indicating all the terminals is set as a destination address 306. In a case where the relay terminals 103 to 107 relay the path information packets, the addresses of the relay terminals 103 to 107 are set as relay source addresses 307, respectively, and ff:ff:ff:ff:ff:ff is set as a relay destination address 308, with the transmission source address 305 and the destination address 306 maintained.

Each of the terminals including reception terminals 108 to 110 refers to the destination address 306 and the relay destination address 308, and starts reception processing of the payload 303 if the destination address 306 or the relay destination address 308 coincides with or includes the address of its own terminal. Note that, if the modulation method is the one that allows the terminal to perform reception, the terminal may perform reception irrespective of the addresses. In the path information packet according to the present embodiment, although ff:ff:ff:ff:ff:ff is set as the relay destination address 308 so as to allow all the terminals to perform reception, the modulation method is adapted to a particular terminal.

FIG. 4 is a functional block diagram illustrating functions performed by the CPU 202. In FIG. 4, a reception processing section 401 receives every packet whose modulation method matches the modulation method of its own terminal and that can be received by its own terminal, determines, based on the destination address, whether or not the packet is the one transmitted to all the terminals (hereinafter referred to as "a flooding packet"), and passes the received packet, if not the flooding packet, as a packet to be relayed, to a modulation method determination section 402. The reception processing section 401 receives various kinds of control packets used in the present invention and outputs necessary data, to a utilization efficiency determination section 403 or a control packet transmission section 404.

The modulation method determination section 402 determines, based on information obtained from the utilization efficiency determination section 403, a modulation method for the packet to be relayed. In the present embodiment, described is a case that employs a modulation method having a communication speed other than the lowest communication speed, for a path information packet (hereinafter referred to as a "beacon") that includes data such as path information and that is periodically transmitted to all the terminals, different from a beacon in the field of wireless communication. Use of a modulation method having a communication speed other than the lowest communication speed allows a great reduction of the bands consumed by the beacon.

The utilization efficiency determination section 403 stores information indicating to which terminal each of the relay terminals 103 to 107 is transmitting a beacon and which terminal can receive the beacon transmitted from its own terminal, and determines a modulation method and a relay terminal that optimize the utilization efficiency of the ad hoc network. For example, the utilization efficiency determination section 403 requests, when it is better to change the modulation method for the beacon being transmitted from its own terminal, the modulation method determination section 402 to change the modulation method to the optimum modulation method. The utilization efficiency determination section 403 requests, when it is better to stop transmitting the beacon being transmitted from its own terminal, a transmission processing section 405 to stop the transmission. The utilization efficiency determination section 403 requests, when it is better to change the relay terminal from which its own terminal is receiving a beacon, the control packet transmission section 404 to change the relay terminal.

The control packet transmission section 404 transmits various kinds of control packets in accordance with a request from the reception processing section 401 or the utilization efficiency determination section 403. For example, the control packet transmission section 404 transmits a beacon request packet or a beacon response packet, in accordance with a request from the reception processing section 401. Further, for example, the control packet transmission section 404 transmits a determination packet or a registration information update packet, in accordance with a request from the utilization efficiency determination section 403. Each of the beacon request packet, the beacon response packet, the determination packet, and the registration information update packet is described below.

The transmission processing section 405 transmits various kinds of control packets provided by the control packet transmission section 404 and a beacon packet. The transmission processing section 405 also transmits general data.

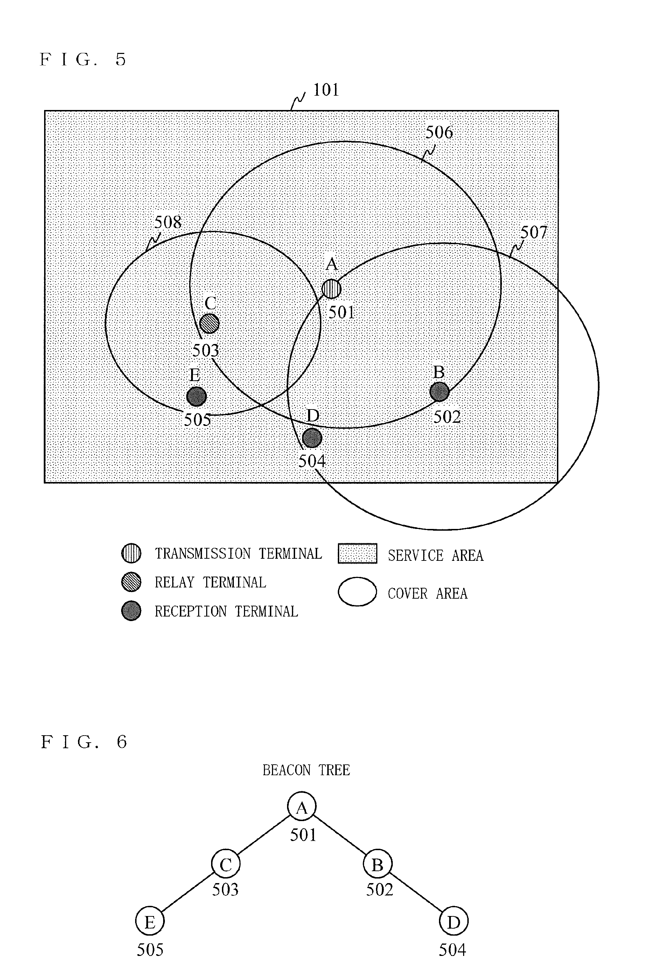

Hereinafter, with reference to FIG. 5 to FIG. 14, there described are operations of the communication terminal device, constructed as described above, of the present invention.

FIG. 5 is a network diagram illustrating a case where a relay terminal B502 is relaying a beacon, using a modulation method having a lowest communication speed, and a relay terminal C503 is relaying a beacon, using a modulation method having a communication speed which is not a lowest speed. Generally, a beacon is relayed by using a modulation method having a lowest communication speed, so as to be transmitted in a wide range. However, in the present embodiment, a beacon is relayed by using a modulation method having a high communication speed, depending on a situation. This allows the whole ad hoc network to greatly reduce the bands consumed for flooding a beacon.

In FIG. 5, a terminal A501, which is a beacon transmission terminal, is transmitting a beacon, using a modulation method having a lowest communication speed. The terminal B502 and the terminal C503 that exist in the cover area 506 of the terminal A501 are relaying the beacon. The terminal B502 is relaying the beacon toward a terminal D504, using a modulation method having a lowest communication speed, because of the long distance between the terminals B and D. The terminal C503 is relaying the beacon toward a terminal E505, using a modulation method having a high communication speed, because of the short distance between the terminals C and E. Specifically, the terminal C503 is using a modulation method having the highest communication speed among the modulation methods that can include the terminal E505 in the cover area 508 of the terminal C503.

As described above, between the terminal C503 and the terminal E505, communicated is a beacon modulated by using a modulation method having the highest communication speed that can be used between the terminals. Accordingly, it is possible to reduce to the maximum extent possible the cover area 508, which allows communication, of the terminal C503. Accordingly, it is possible to minimize the overlapping portion between the cover area 508 of the terminal C503 and the cover area 507, which allows communication, of the terminal B502, so as to minimize the range in which a beacon is transmitted from the terminal C503. As a result, it is possible to reduce the probability that beacons overlap with each other in the whole network, thereby enabling prevention of needless increase in the percentage of the bands consumed for transmission of beacons in the bands consumed for all the communication.

FIG. 6 is a diagram illustrating a beacon tree in the state of FIG. 5. In the present embodiment, it is assumed that each terminal has already registered information of toward which terminal its own terminal is transmitting a beacon and which terminal is relaying a beacon to the own terminal. Each terminal updates the information (hereinafter, referred to as reception terminal information), thereby changing a transmission destination and a transmission/reception terminal of the beacon. A beacon tree is a tree structure indicating transmission/reception paths of a beacon, in accordance with the reception terminal information. In FIG. 6, each of the terminal B502 and the terminal C503 receives a beacon from the terminal A501. The terminal D504 receives the beacon from the terminal B502, and the terminal D505 receives the beacon from the terminal B503.

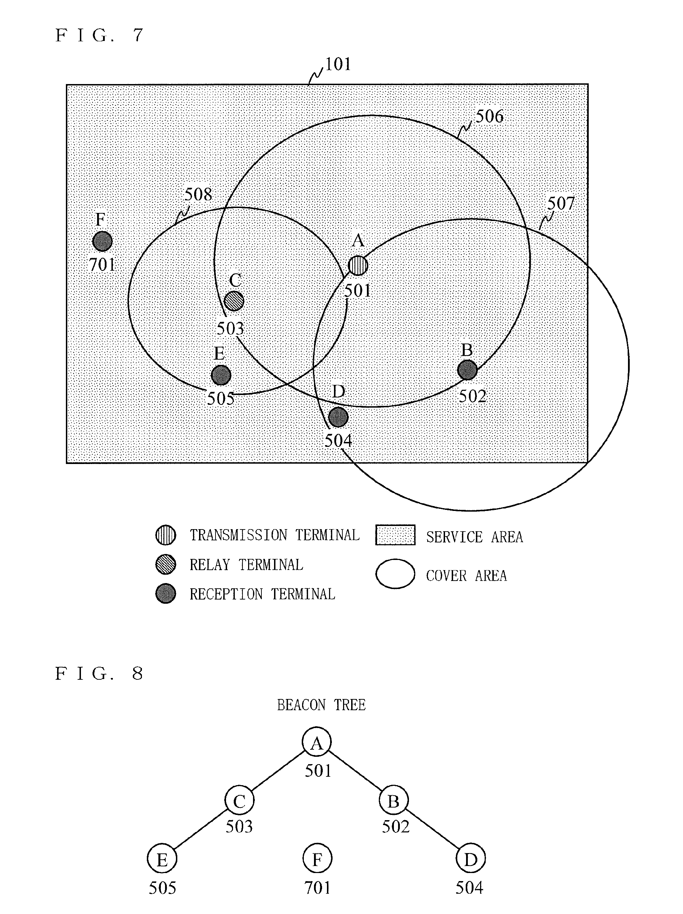

FIG. 7 is a network configuration diagram after an entry of a new terminal F701 into the state of FIG. 5. As not being included in any of the cover areas of the terminals A501, B502, and C503, the terminal F701 cannot enter the network. In such a case, it is necessary for the terminal F701 to have one of the terminals relay the beacon. In the present embodiment, when the control packet transmission section 404 in the terminal F701 has determined that a beacon has not been received from the network for a predetermined period of time, the terminal F701 transmits a beacon request packet, using a modulation method having the lowest communication speed among the modulation methods that can be used in the network.

Accordingly, even in a case where the terminal F701 exists outside the cover area which allows the terminal F701 to communicate with other terminals on the network, if the terminal F701 transmits a beacon request packet, using a modulation method having the lowest communication speed among the modulation methods that can be used in the network, it is possible to expand to the maximum extent possible the range which allows communication of the beacon request packet. As a result, the beacon request packet reaches one of the terminals on the network, thereby enabling the terminal F701 to start communication with the terminal.

FIG. 8 is a diagram illustrating a beacon tree in the state of FIG. 7. With reference to FIG. 8, the terminal F701, as just having newly entered the network, is not included in the beacon tree and thus cannot receive a beacon.

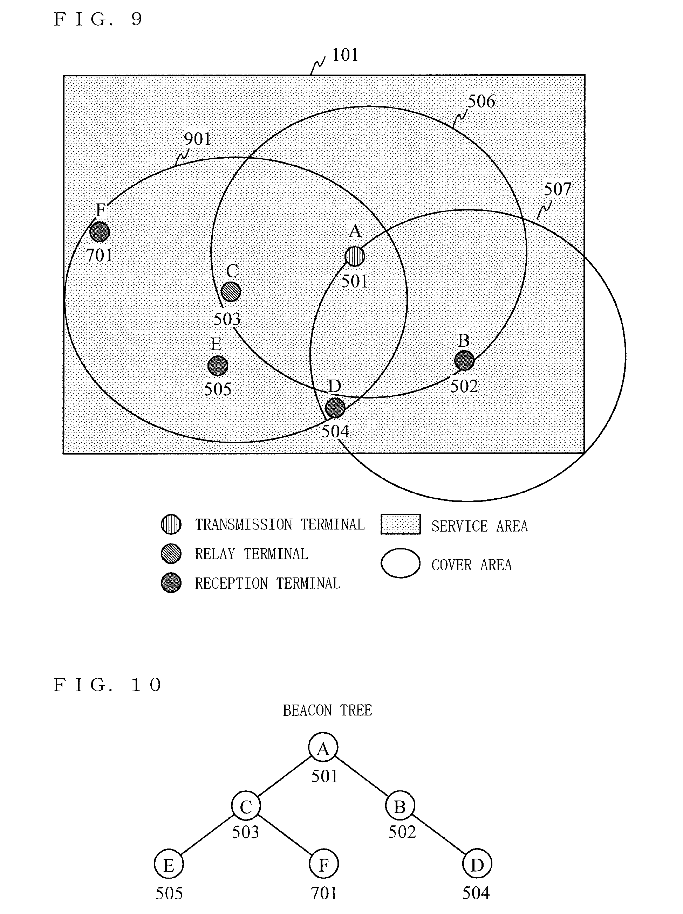

FIG. 9 is a network diagram illustrating a case where the terminal C503 has lowered the modulation speed such that the terminal F701 can perform reception. In the present embodiment, the terminal C503 receives a beacon request packet transmitted from the terminal F701. As shown in FIG. 5 and FIG. 7, the terminal C503 is transmitting, to the terminal E505, a beacon, using a modulation method having a higher communication speed than the lowest communication speed. Now, the terminal C503 changes the modulation method for transmitting a beacon, to a modulation method having a lower communication speed, such that the terminal F701 can receive the beacon. When the modulation method for transmitting a beacon is changed to a modulation method having a lower communication speed, the cover area 508 of the terminal C503 is expanded to be the cover area 901. Thus, the terminal C503 can cause the terminal F701 to be included in the cover area 901.

FIG. 10 is a diagram illustrating a beacon tree in the state of FIG. 9. With reference to FIG. 10, the terminal F701 is included in the beacon tree, and all the terminals is in a state that the respective terminals can receive a beacon.

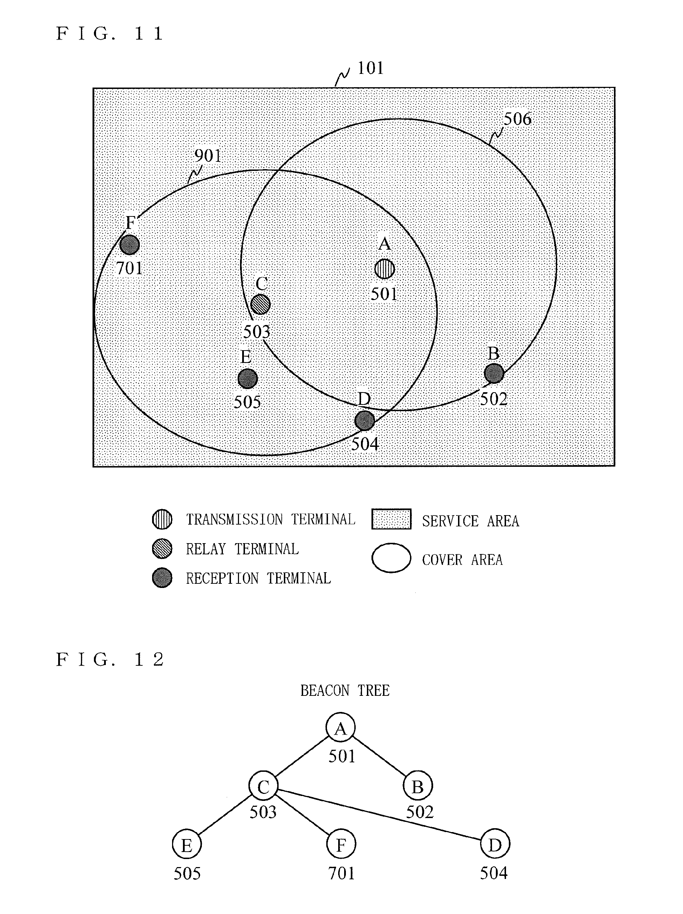

FIG. 11 is a network configuration diagram illustrating a state after the terminal D504 has switched a beacon relay source, from the terminal B502 to the terminal C503. As described above, since the terminal C503 has expanded the cover area 901, the terminal D504 is in both the cover areas 507 and 901 of the terminal B502 and the terminal C503, respectively (see FIG. 9). That is, the terminal D504 receives beacons from both of the terminal B502 and the terminal C503. Now, if the terminal B502 stops relaying a beacon to the terminal D504, it is possible to suppress the band consumption in total. Therefore, in the present embodiment, in a case where, during the time period when the terminal D504 receives a beacon from the terminal B502, the terminal D504 receives, from the terminal C503, a beacon modulated by using a modulation method having a higher communication speed than the communication speed being used between the terminal D504 and the terminal B502, the terminal D504 switches the beacon transmission source, from the terminal B502 to the terminal C503.

Accordingly, in a case of an existence of the terminal C503 that modulates a beacon by using a modulation method having a higher communication speed, the beacon communication range of the terminal C503 is smaller. Therefore, if the terminal C503 that has the smaller beacon communication range is selected, it is possible to reduce the number of the beacon transmission bodies, and to reduce the beacon communication ranges in the whole network. As a result, it is possible to effectively reduce the percentage of the bands consumed for transmission of beacons in the bands consumed for all the communication.

Further, when the beacon transmission source is switched from the terminal B502 to the terminal C503, the control packet transmission section 404 of the terminal D504 notifies the terminal B502 of the switching of the beacon transmission source. In a case where the terminal B502 has been notified of the switching of the beacon transmission source and has no other beacon transmission destination than the terminal D504, the terminal B502 stops transmitting a beacon (see FIG. 11).

In this manner, in a case where the beacon transmission source is switched from the terminal B502 to the terminal C503, when the terminal B502 is notified of the switching of the beacon transmission source, the terminal B502, which has been the beacon transmission source, may stop transmitting a beacon in accordance with the notification. Accordingly, it is possible to reduce the number of the beacon transmission bodies, and as a result, it is possible to effectively reduce the percentage of the bands consumed for transmission of beacons in the bands consumed for all the communication.

In addition, in a case where the terminal B502 has been notified of the switching of the beacon transmission source and has no other beacon transmission destination than the terminal D504, the terminal B502 stops transmitting a beacon, whereby the beacon communication range provided by the terminal B502 (that is, the cover area 507) disappears. Accordingly, the overlapping portion between the cover area 507 of the terminal B502 and the communication range of the terminal C503 (that is, the cover area 901) disappears, thereby enabling prevention of needless increase in the percentage of the bands consumed for transmission of beacons in the bands consumed for all the communication. As a result, it is possible to effectively secure the bands that are to be consumed for transmitting data intended to be transmitted.

FIG. 12 is a diagram illustrating a beacon tree in the state of FIG. 11. With reference to FIG. 12, the terminal D504 is connected to the terminal C503, and the terminal B502 is not a relay terminal but a reception terminal.

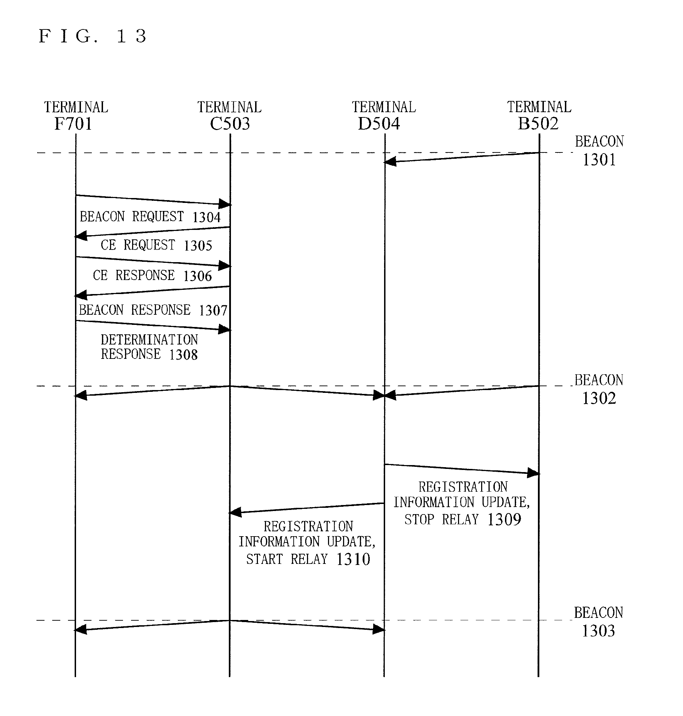

FIG. 13 is a sequence diagram illustrating a transition of the state from FIG. 5 to FIG. 12. With reference to FIG. 13, the terminal B502 is relaying a beacon 1301 to the terminal D504. The terminal F701, which has failed in receiving the beacon, broadcasts a beacon request 1304 to surrounding terminals. Here, the term broadcast means transmission by using a modulation method having a lowest communication speed and by using ff:ff:ff:ff:ff:ff as the destination address. Note that, the timing at which the terminal F701 sends the beacon request 1304 may be after the terminal F701 has failed in receiving a beacon for a predetermined period of time, or at the time of startup of the terminal.

Having received the beacon request 1304, the terminal C503 transmits to the terminal F701 a CE (CHANNEL ESTIMATION) request 1305, and receives, from the terminal F701, a CE response 1306 as a response to the CE request 1305. Thereby, the terminal C503 estimates a modulation method having the highest communication speed among the modulation methods that allow communication with the terminal F701. Once the modulation method having the highest communication speed is known, the control packet transmission section 404 in the terminal C503 returns a beacon response 1307, using the modulation method, via the transmission processing section 405, to the terminal F701.

Having received the beacon response, the terminal F701 makes a determination of the terminal C503 as the relay terminal for relaying a beacon, and the control packet transmission section 404 in the terminal F701 transmits, via the transmission processing section 405, to the terminal C503, a determination response 1308 for having the terminal C503 relay a beacon. Here, since the terminal C503 is already communicating with the terminal E505 (see FIG. 7), the terminal C 503 determines a modulation method having the highest communication speed that can be used between the terminal E505 and the terminal F701. Having received the determination response, the terminal C503 registers the terminal F701, in addition to the terminal E505, as a beacon reception terminal, and transmits a beacon 1302, using the optimum modulation method that allows both terminals to receive the beacon 1302.

As described above, the terminal F701 transmits a beacon request packet, using a modulation method having the lowest communication speed among the modulation methods that can be used in the network. Accordingly, even in a case where the terminal F701 exists outside the cover area which allows the terminal F701 to communicate with other terminals on the network, if the terminal F701 transmits a beacon request packet, using a modulation method having the lowest communication speed among the modulation methods that can be used in the network, it is possible to expand to the maximum extent possible the range which allows communication of the beacon request packet. As a result, the beacon request packet reaches one of the terminals on the network, thereby enabling the terminal F701 to start communication with the one of the terminals.

Since the beacon 1302 from the terminal C503 is now transmitted by using a lower speed modulation method, the terminal D504 can receive both of the beacon 1302 from the terminal B502 and the beacon 1302 from the terminal C503. Now, the terminal D504 switches the relay source to a terminal that can perform a higher speed communication. It is assumed that, different from a beacon in the field of wireless communication, information about to which terminal a high speed communication is possible is stored, as path information, in a beacon. When a reception terminal no longer needs a relay from a relay source, the relay source may stop relaying a beacon. Since the present embodiment allows transmission by using a modulation method having a higher communication speed, a beacon relay from the terminal B502, which has been the relay source, is stopped, and a beacon relay from the terminal C503, which is a new relay source, is started. After the terminal B502 has stopped the relay to the terminal D504, the terminal B502 may stop relaying a beacon since there is no other terminal to which the terminal B502 should relay a beacon.

As described above, in the present first embodiment, in a case where, during the time period when the terminal D504 receives a beacon from the terminal B502, the terminal D504 receives, from the terminal C503, a beacon modulated by using a modulation method having a higher communication speed than the communication speed used between the terminal D504 and the terminal B502, the terminal D504 switches the beacon transmission source, from the terminal B502 to the terminal C503. In a case of an existence of the terminal C503 that modulates a beacon, using a higher communication speed, the beacon communication range of the terminal C503 is smaller. Therefore, if the terminal C503 that has the smaller beacon communication range is selected, it is possible to reduce the number of the beacon transmission bodies and to reduce the beacon communication ranges in the whole network. As a result, it is possible to effectively reduce the percentage of the bands consumed for transmission of beacons in the bands consumed for all the communication.

The control packet transmission section 404 in the terminal D504 transmits, via the transmission processing section 405, to the terminal B502, a registration information update packet 1309 so as to request the terminal B502 to stop the relay, and transmits to the terminal C503 a registration information update packet 1310 so as to request the terminal C503 to start a relay. As a result, a beacon 1303 is transmitted from the terminal C503 to both of the terminal D504 and the terminal F701. Note that, beacons from the terminal C503, as having been transmitted by broadcast, have already reached the terminal D504. The reason why the terminal D504 transmits to the terminal C503 the registration information update packet 1310 and requests the terminal C503 to start a relay is to notify the terminal C503 that the terminal D504 is now a terminal receiving beacons from the terminal C503.

In this manner, in a case where the beacon transmission source is switched from the terminal B502 to the terminal C503, the control packet transmission section 404 of the terminal D504 transmits a registration information update packet 1309 to the terminal B502, so as to switch the beacon transmission source. In a case where the terminal B502 has been notified of the switching of the beacon transmission source, the terminal B502 stops transmitting a beacon since there is no other terminal, than the terminal D504, to which the terminal B502 should transmit a beacon.

In a case where the beacon transmission source is switched from the terminal B502 to the terminal C503, when the terminal B502 is notified of the switching of the beacon transmission source, the terminal B502, which has been the beacon transmission source, may stop transmitting a beacon in accordance with the registration information update packet 1309. Accordingly, it is possible to reduce the number of the beacon transmission bodies, and as a result, it is possible to effectively reduce the percentage of the bands consumed for transmission of beacons in the bands consumed for all the communication.

Further, when the terminal B502 stops transmitting a beacon, the beacon cover area 507 provided by the terminal B502 disappears. Accordingly, the overlapping portion between the cover area 507 of the terminal B502 and the cover area 901 of the terminal C503 disappears (see FIG.11), thereby enabling prevention of needless increase in the percentage of the bands consumed for transmission of beacons in the bands consumed for all the communication. As a result, it is possible to effectively secure the bands that are to be consumed for transmitting data intended to be transmitted.

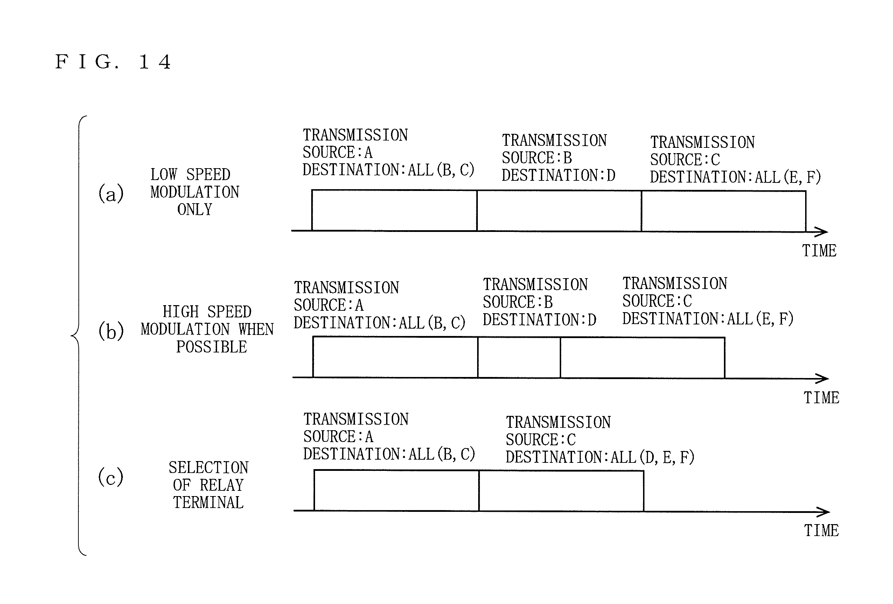

FIG. 14 shows, as a function of time, bands consumed by beacons in the whole network in various kinds of conditions of the first embodiment. When a modulation method having a lowest communication speed is used for all transmissions, the transmissions take a great amount of time, leaving less time that can be used for a transmission of data intended to be transmitted (FIG. 14 (a)). For a terminal to which high speed communication is possible (see FIG. 5), it is possible, by using a modulation method having a high communication speed, to obtain a certain reduction effect on the bands to be consumed (FIG. 14 (b)). Further, by combining the selecting operations of relay terminals (see FIG. 11), it is possible to further reduce the bands to be consumed (see FIG. 14 (c)).

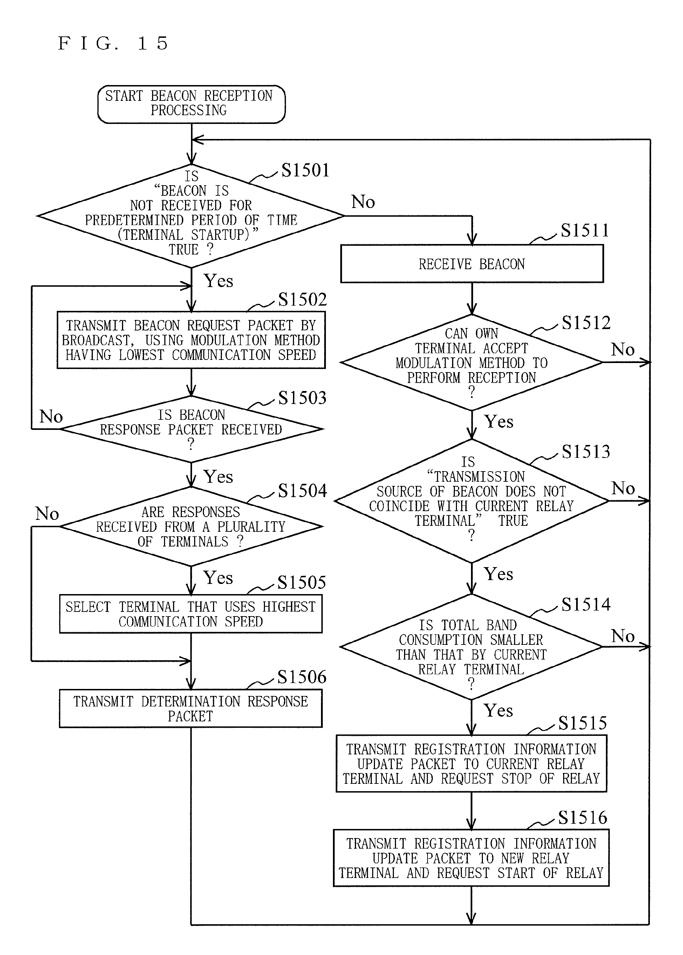

FIG. 15 is a flowchart showing beacon reception processing performed at each terminal. With reference to FIG. 15, a terminal transmits, after not having received a beacon for a predetermined period of time or at the time of startup of the terminal (step S1501), a beacon request packet via the network to surrounding terminals, using a modulation method having a lowest communication speed (step S1502). When having received from one of the surrounding terminals a beacon response packet, the terminal transmits a determination response packet toward the one of the surrounding terminals (step S1503). When having failed in receiving a beacon response packet, the terminal retransmits a beacon request packet. When having received beacon response packets from a plurality of terminals (step S1504), the terminal selects among the plurality of terminals a terminal which allows communication that uses a modulation method having the highest communication speed (step S1505), and transmits to the selected terminal a determination response packet (step S1506).

Accordingly, even in a case where a terminal exists outside the cover areas of other terminals on the network, if the terminal transmits a beacon request packet, using a modulation method having the lowest communication speed among the modulation methods that can be used in the network, it is possible to expand to the maximum extent possible the range which allows communication of the beacon request packet. As a result, the beacon request packet reaches one of the terminals on the network, thereby enabling the terminal to restart or start communication with the one of the terminals on the network.

On the other hand, when having received a beacon (step S1511), the terminal checks whether or not the terminal itself can accept the modulation method and receive the payload (step S1512). When the terminal cannot receive the payload, the processing returns to step S1501. When the terminal can receive the payload, if the beacon transmission source coincides with the current relay terminal, the processing returns to the ordinary beacon reception processing. When the beacon transmission source does not coincide with the current relay terminal (step S 1513), it is determined which of the current relay terminal and the terminal being the beacon transmission source consumes fewer bands in total (step S1514).

Specifically, when the communication speed used by the terminal being the beacon transmission source is compared with the communication speed used by the current relay terminal, and if the communication speed used by the terminal being the beacon transmission source is higher than the communication speed used by the current relay terminal, the beacon communication range provided by the terminal being the beacon transmission source is smaller. In such a case, if the terminal being the beacon transmission source is selected instead of the current relay terminal, it is possible to reduce the number of the beacon transmission bodies and to reduce the beacon communication ranges in the whole network. In this case, since it is determined that a relay performed by the terminal being the beacon transmission source consumes fewer bands in total than a relay performed by the current relay terminal, a registration information update packet is transmitted to the current relay terminal so as to request the current relay terminal to stop the relay (step S1515). Concurrently, a registration information update packet is transmitted to the terminal being the beacon transmission source so as to request the terminal being the beacon transmission source to become a new relay terminal and start a relay (step S1516). As a result, it is possible to effectively reduce the percentage of the bands consumed for transmission of beacons in the bands consumed for all the communication. Note that, the above determination may be made based on path information included in a beacon.

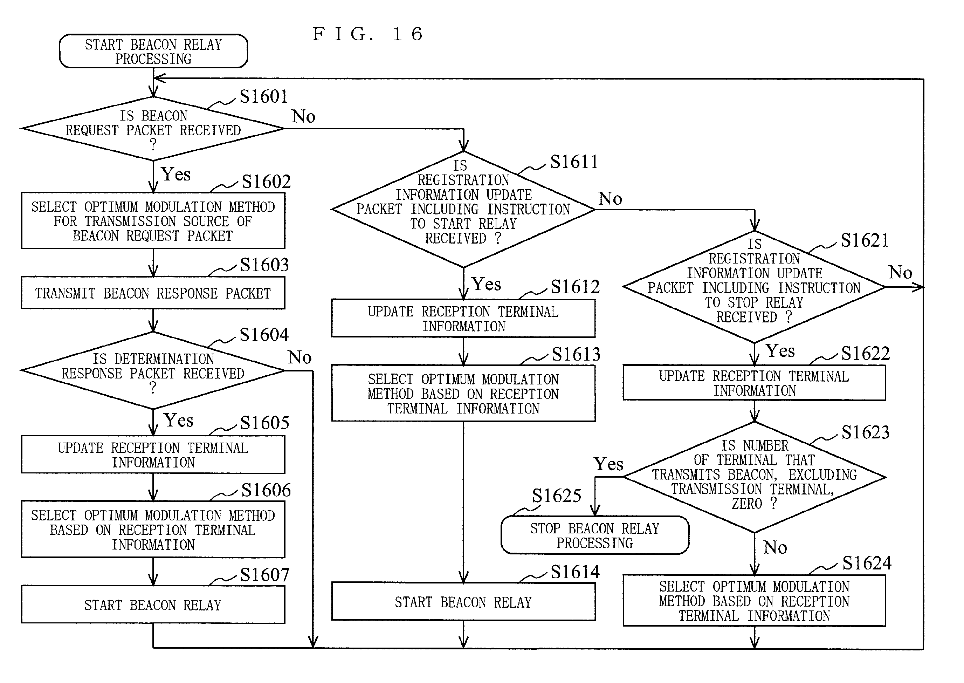

FIG. 16 is a flowchart showing beacon transmission processing performed at each terminal. With reference to FIG. 16, when having received a beacon request packet (step S1601), a terminal selects the optimum modulation method for the transmission source of the beacon request packet (step S1602). When the optimum modulation method is known from path information or past communication histories, a beacon response packet is transmitted by using the modulation method (step S1603). When the optimum modulation method is not known, the optimum modulation method is to be researched by using a CE request and a CE response. The terminal updates, when having received a determination response packet from the terminal to which the beacon response packet has been transmitted (step S1604), reception terminal information (step S1605). Based on the updated reception terminal information, a modulation method having the highest communication speed among the modulation methods that allow all the terminals to perform reception is selected as the optimum modulation method. Thereafter, beacon relay processing is started (step S1607).

When a registration information update packet that includes an instruction to start a relay is received (step S1611), the reception terminal information is updated (step S1612), and based on the updated reception terminal information, a modulation method having the highest communication speed among the modulation methods that allow all the terminals to perform reception is selected as the optimum modulation method (step S1613). Thereafter, beacon relay processing is started (step S1614).

When a registration information update packet that includes an instruction to stop the relay is received (step S1621), the reception terminal information is updated (step S1622), and then made is a determination of the number of terminals to which a beacon is to be transmitted, excluding the terminal that has transmitted the instruction to stop the relay (step S1623). When the number of the terminals is zero, beacon relay processing is stopped (step S 1625). Accordingly, the beacon communication range provided by the present terminal disappears. Accordingly, it is possible to reduce the number of the beacon transmission bodies and to eliminate the overlapping portion between the communication range of the present terminal and that of the other terminal. As a result, it is possible to prevent needless increase in the percentage of the bands consumed for transmission of beacons in the bands consumed for all the communication, and to effectively secure the bands that are to be consumed for transmitting data intended to be transmitted. On the other hand, when other reception terminals remain, the optimum modulation method is selected based on the registered reception terminal information, and beacon relay processing is continued (step S1624).

### (Second Embodiment)

In the first embodiment, description is given on operations to be performed in a case where a new terminal has entered the network. In a PLC network, where terminals are not moved, a change of a state of the network may occur in a case where a PLC terminal is newly connected to the PLC network, or a PLC terminal is removed from the PLC network; and also, in a case where a noise source is generated when an electrical household appliance, such as a cleaner, has just been connected to the PLC network, or when an electrical household appliance, such as a microwave oven, which has been connected to the PLC network is turned ON/OFF. In the present second embodiment, description is given on operations to be performed in a case where a noise source is generated when an electrical household appliance is connected or the like.

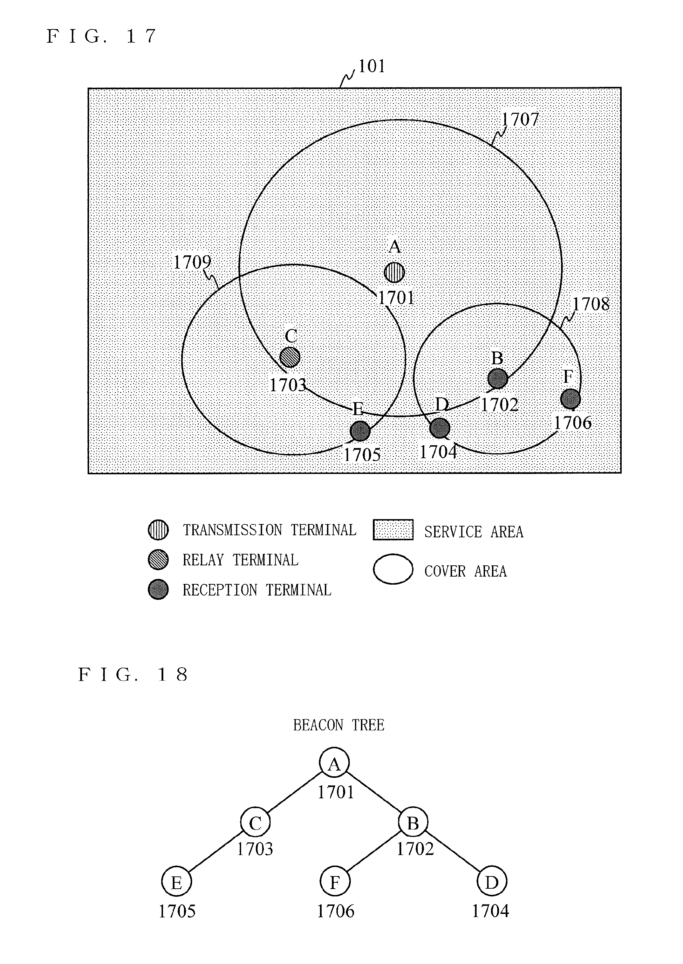

FIG. 17 is a network configuration diagram illustrating a state before generation of a noise source. With reference to FIG. 17, a terminal A1701, which is a beacon transmission terminal, is transmitting a beacon, using a modulation method having a lowest communication speed. Each of the terminal B1702 and the terminal C1703 that exist in the cover area 1707, which allows communication, of the terminal A1701, is relaying the beacon. The terminal B1702 is relaying the beacon toward a terminal D1704 and a terminal 1706, using a modulation method having the highest communication speed among the modulation methods that allow both of the terminals D1704 and the terminal F1706 to receive the beacon. The terminal C1703 is relaying the beacon toward a terminal E1705, using a modulation method having the highest communication speed among the modulation methods that allow the terminal E1705 to receive the beacon.

FIG. 18 is a diagram illustrating a beacon tree in the state of FIG. 17. With reference to FIG. 18, each of the terminal B1702 and the terminal C1703 receives a beacon from the terminal A1701. Each of the terminal D1704 and the terminal F1706 receives the beacon from the terminal B1702. The terminal E1705 receives the beacon from the terminal C1703.

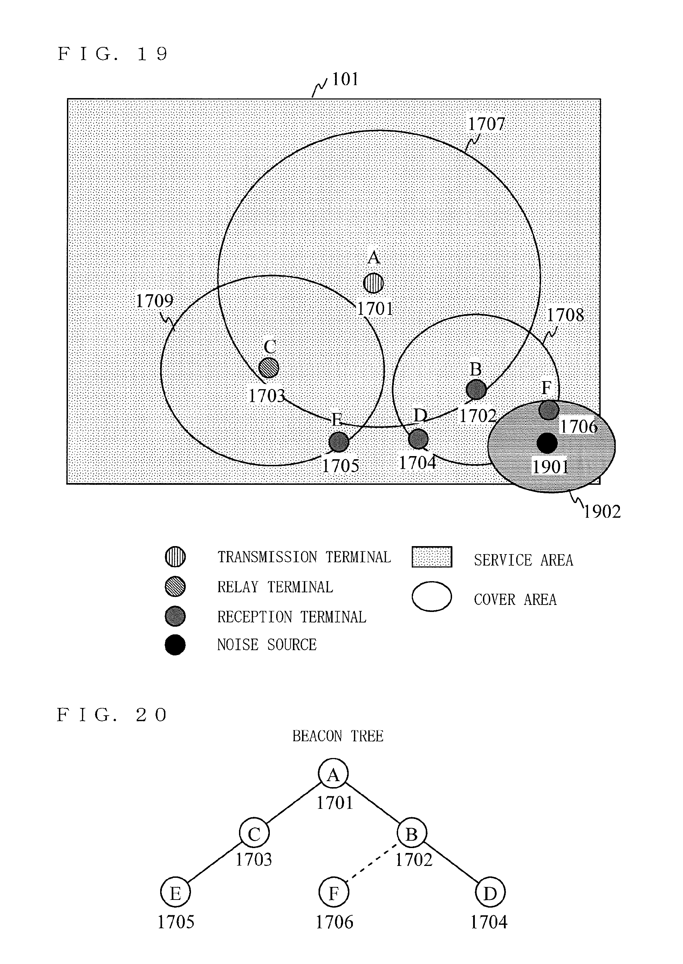

FIG. 19 is a network configuration diagram illustrating a case after the entry of a noise source 1901 into the state of FIG. 17. The case after the entry of the noise source 1901 means, for example, a case where an electrical household appliance, such as a cleaner, has just been connected to the PLC network, or where an electrical household appliance, such as a microwave oven, which has been connected to the PLC network, is turned ON/OFF. The entry of the noise source 1901 greatly increases a packet loss rate in the surrounding area. A loss area 1902 is large against a terminal using a modulation method having a high communication speed, and is small against a terminal using a modulation method having a low communication speed. Accordingly, the loss area 1902 becomes large against the terminal B1702 that is using a modulation method having a high communication speed, and thus, includes the terminal F1706. That is, there occurs a case in which the terminal F1706, although being included in the cover area 1708 of the terminal B1702, cannot receive a beacon.

In the present second embodiment, since the terminal F1706 has not received a beacon from the network for a predetermined period of time, the terminal F1706 transmits, using a modulation method having the lowest communication speed among the modulation methods that can be used between the terminal F1706 and the terminal B1702, a beacon request packet to the terminal B1702 that has been transmitting beacons. Accordingly, even in a case where the terminal F1706 exists in the cover area 1708 of the terminal B1702 but cannot receive a beacon from the terminal B1702, if the terminal F1706 transmits a beacon request packet, using a modulation method having the lowest communication speed among the modulation methods that can be used between the terminal F1706 and the terminal B1702, it is possible to expand to the maximum extent possible the range which allows communication of the beacon request packet. As a result, the beacon request packet reaches the terminal B1702, thereby enabling the terminal F 1706 to restart communication with the terminal B 1702.

FIG. 20 is a diagram illustrating a beacon tree in the state of FIG. 19. With reference to FIG. 20, there occurs a case where the terminal F1706 is, when viewed from the standpoint of the cover area 1708 of the terminal B1702, to receive a beacon from the terminal B1702 but actually cannot receive the beacon.

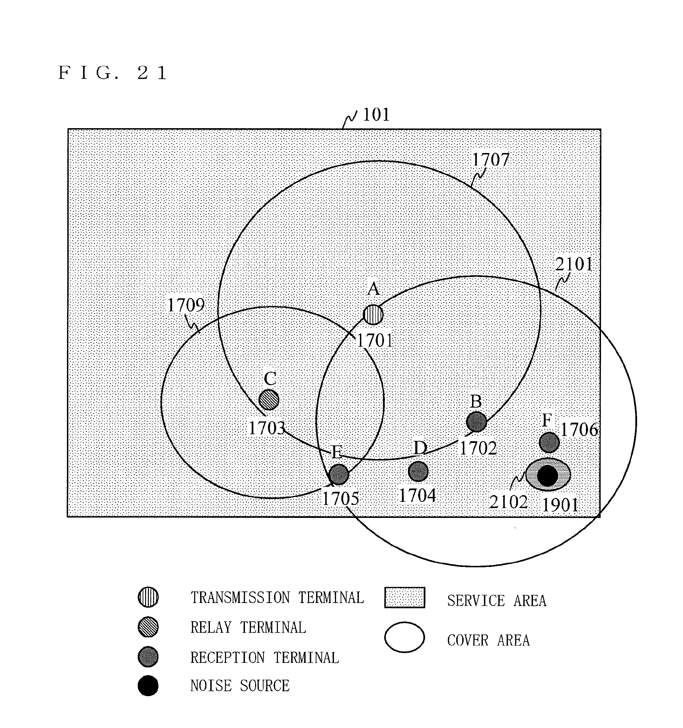

FIG. 21 is a network diagram illustrating a case after the modulation method has been switched, due to the entry of the noise source 1901, to a modulation method having a lower communication speed. In the present second embodiment, the terminal B1702 receives a beacon request packet transmitted from the terminal F1706. Now, the terminal B1702 changes the modulation method used for transmitting a beacon, to a modulation method having a lower communication speed, such that the terminal F1706 can receive the beacon. When the modulation method used for transmitting a beacon is changed to a modulation method having a lower communication speed, the cover area 1708 of the terminal B1702 is expanded to be the cover area 2101.

As described above, use of a modulation method having a lower communication speed reduces the area in which a packet loss is generated. As a result, the terminal B1702 is able to include the terminal F 1706 in the cover area 2101, thereby enabling the terminal F 1706 to receive a beacon from the terminal B1702. The state of the beacon tree in FIG. 20 returns to that in FIG. 18.

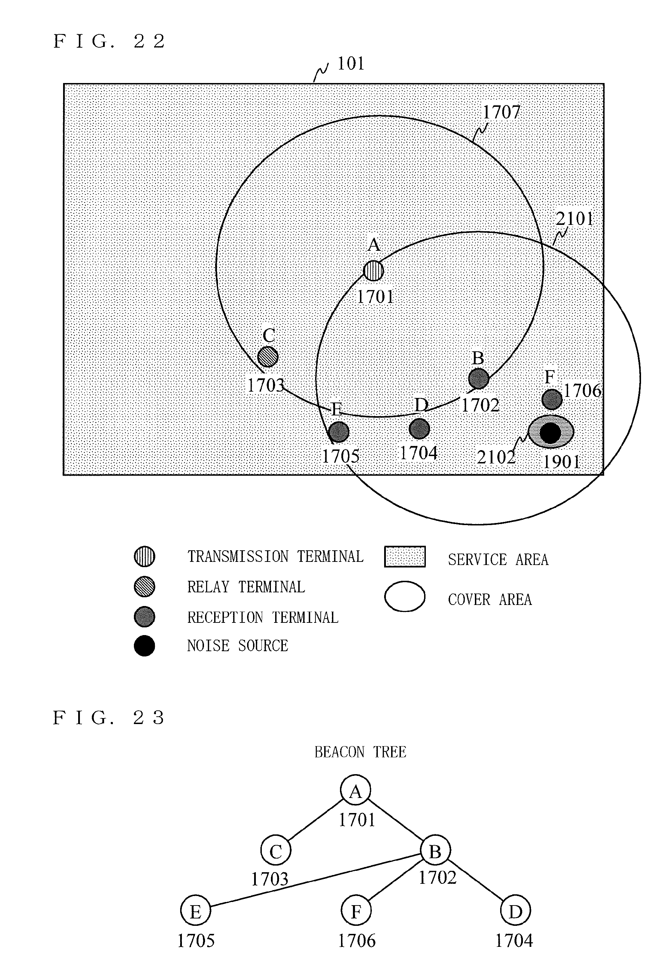

FIG. 22 is a network diagram illustrating a case where the terminal E1705 has switched the beacon relay source, from the terminal C1703 to the terminal B1702, after the terminal B1702 has switched the modulation method to a modulation method having a lower communication speed to start transmission.

That is, since the terminal B1702 has the expanded cover area 2101, the terminal E1705 now belongs to both of the cover areas 2101 and 1709 of the terminal B1702 and the terminal C1703, respectively. Accordingly, the terminal E1705 receives beacons from both of the terminal B1702 and the terminal C1703. Here, if the terminal C1703 stops relaying the beacon to the terminal E1705, it is possible to suppress the band consumption in total. Therefore, in the present second embodiment, in a case where, during the time period when the terminal E1705 receives a beacon from the terminal C1703, the terminal E1705 receives, from the terminal B1702, a beacon modulated by using a modulation method having a lower communication speed than the communication speed used between the terminal E1705 and the terminal C1703, the terminal E1705 switches the beacon transmission source, from the terminal C 1703 to the terminal B 1702.

In a case of an existence of the terminal B1702 that modulates a beacon by using a modulation method having a lower communication speed, the cover area 2101 of the terminal B 1702 is larger than the cover area 1709 of the terminal C 1703. This allows many terminals to receive a beacon from the terminal B1702, and therefore, if the terminal B1702, which is the transmission source of a beacon that is to be received by more terminals, is selected, it is possible to reduce the number of the beacon transmission bodies. As a result, it is possible to effectively reduce the percentage of the bands consumed for transmission of control packets in the bands consumed for all the communication.

In a case where the beacon transmission source is switched from the terminal C 1703 to the terminal B1702, the control packet transmission section 404 in the terminal E 1705 notifies the terminal C1703 of the switching of the beacon transmission source. In a case where the terminal C1703 has been notified of the switching of the beacon transmission source and has no other beacon transmission destination than the terminal E1705, the terminal C1703 stops transmitting a beacon.

As described above, in a case where the beacon transmission source is switched from the terminal C1703 to the terminal B1702, when the terminal C1703 is notified of the switching of the beacon transmission source, the terminal C1703, which has been the beacon transmission source, may stop transmitting a beacon in accordance with the notification. Accordingly, it is possible to reduce the number of the beacon transmission bodies, and as a result, it is possible to effectively reduce the percentage of the bands consumed for transmission of beacons in the bands consumed for all the communication.

Further, when the terminal C1703 stops transmitting a beacon, the beacon cover area 1709 provided by the terminal C1703 disappears. Accordingly, the overlapping portion between the cover area 1709 of the terminal C1703 and the cover area 2101 of the terminal B1702 disappears, thereby enabling prevention of needless increase in the percentage of the bands consumed for transmission of beacons in the bands consumed for all the communication. As a result, it is possible to effectively secure the bands that are to be consumed for transmitting data intended to be transmitted.

FIG. 23 is a diagram illustrating a beacon tree in the state of FIG. 22. With reference to FIG. 23, the terminal C1703 is the one that performs reception only, and the terminal B1702 is transmitting a beacon toward the terminal D1704, the terminal E1705, and the terminal F1706.

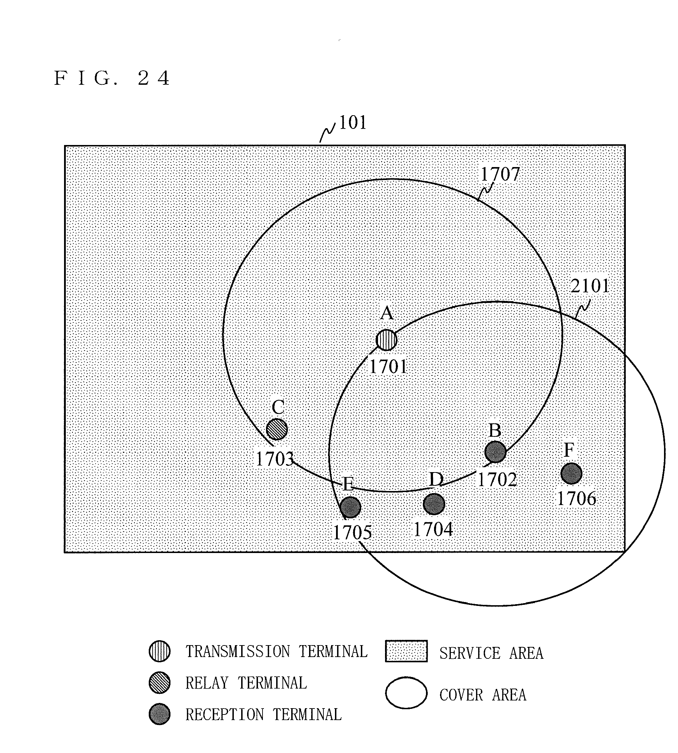

FIG. 24 is a network diagram illustrating a case after the noise source 1901 has been removed from the state of FIG. 22. With reference to FIG. 24, even after the noise source 1901 has been removed, each of the terminal E1705 and the terminal F1706 continues to receive a beacon from the terminal B1702. Note that, if the terminal E1705 switches the beacon transmission source, from the terminal B1702 to the terminal C1703, it is possible for the terminal E1705 to switch the modulation method to a modulation method having a higher communication speed. In this case, path information between the terminal E1705 and the terminal C1703 and path information between the terminal E1705 and the terminal B1702 may be included in a beacon such that the terminal E1705 can determine a modulation method based on the path information.

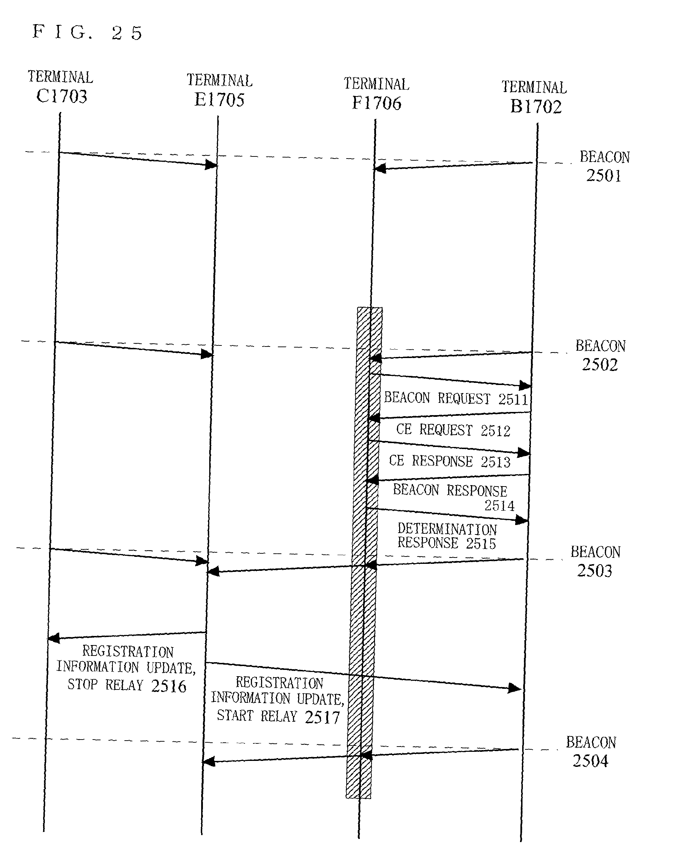

FIG. 25 is a sequence diagram illustrating a transition of the state from FIG. 17 to FIG. 24. With reference to FIG. 25, the terminal E1705 is receiving a beacon 2501 from the terminal C1703, and the terminal F1706 is receiving a beacon 2501 from the terminal B1702. Due to the entry of a noise source, the terminal F1706 cannot receive the beacon 2502 being transmitted from the terminal B1702. Since the terminal F1706 has not received a beacon for a predetermined period of time, the terminal F1706 transmits a beacon request 2511, using a modulation method having the lowest communication speed among the modulation methods that can be used between the terminal F1706 and the terminal B1702. Accordingly, even in a case where the terminal F1706 exists in the cover area 1708 of the terminal B1702 but cannot receive a beacon from the terminal B1702, if the terminal F1706 transmits a beacon request packet, using a modulation method having the lowest communication speed among the modulation methods that can be used between the terminal F1706 and the terminal B1702, it is possible to expand to the maximum extent possible the range which allows communication of the beacon request 2511. As a result, the beacon request 2511 reaches the terminal B1702, thereby enabling the terminal F 1706 to restart communication with the terminal B 1702.

Having received the beacon request 2511, the terminal B1702 transmits a CE request 2512 to the terminal F1706, receives, as a response, a CE response 2513 from the terminal F1706, and selects the optimum modulation method in the presence of the noise source. The terminal B1702 returns a beacon response 2514, using the optimum modulation method. When having received the beacon response 2514, the terminal F1706 returns a determination response 2515. Here, since the terminal B1702 is already communicating with the terminal D1704 (see FIG. 19), the terminal B1702 determines the highest speed that can be used between the terminal D1704 and the terminal F1706. Having received the determination response, the terminal B1702 reregisters the terminal F 1706 as a beacon reception terminal, and transmits a beacon 2503, using the optimum modulation method that allows both of the terminal F1706 and the terminal D1704 to receive the beacon 2503.

Note that, the operations after the beacon response may be omitted and the modulation method for the beacon itself may be changed. In that case, if a beacon is lost, another beacon request is transmitted.

A beacon transmitted from the terminal B1702 by using the changed modulation method reaches the terminal F1706, without being lost. In this case, the terminal E1705 receives a beacon 2503 from each of the terminal B1702 and the terminal C1703. In the present second embodiment, in a case where, during the time period when the terminal E1705 receives a beacon from the terminal C1703, the terminal E1705 receives, from the terminal B1702, a beacon modulated by using a modulation method having a lower communication speed than the communication speed used between the terminal E1705 and the terminal C1703, the terminal E1705 switches the beacon transmission source, from the terminal C1703 to the terminal B 1702.

In a case of an existence of the terminal B1702 that modulates a beacon, using a modulation method having a lower communication speed, the cover area 2101 of the terminal B 1702 is larger than the cover area 1709 of the terminal C 1703. This allows many terminals to receive a beacon from the terminal B1702, and therefore, if the terminal B1702, which is the transmission source of a beacon that is to be received by more terminals, is selected, it is possible to reduce the number of the beacon transmission bodies. As a result, it is possible to effectively reduce the percentage of the bands consumed for transmission of control packets in the bands consumed for all the communication.

In order to select the terminal B1702, the terminal E1705 transmits a registration information update packet 2516 toward the terminal C1703 so as to request the terminal C1703 to stop relaying a beacon. In a case where the terminal C1703 has received the update packet 2516 and has no other beacon transmission destination than the terminal E1705, the terminal C1703 stops transmitting a beacon. Accordingly, it is possible to reduce the number of the beacon transmission bodies, and as a result, it is possible to effectively reduce the percentage of the bands consumed for transmission of beacons in the bands consumed for all the communication. Further, when the terminal C 1703 stops transmitting a beacon, the beacon cover area 1709 provided by the terminal C1703 disappears. Accordingly, the overlapping portion between the cover area 1709 of the terminal C1703 and the cover area 2101 of the terminal B1702 disappears, thereby enabling prevention of needless increase in the percentage of the bands consumed for transmission of beacons in the bands consumed for all the communication. As a result, it is possible to effectively secure the bands that are to be consumed for transmitting data intended to be transmitted.

The terminal E1705 transmits a registration information update packet 2517 toward the terminal B1702 so as to request the terminal C1702 to start relaying a beacon. Accordingly, the terminal E1705 receives the beacon 2504 only from the terminal B1702. Note that, beacons from the terminal B1702, as having been transmitted by broadcast, have already reached the terminal E1705. The reason why the terminal E1705 transmits to the terminal B1702 the registration information update packet 2517 so as to request the terminal B1702 to start a relay, is to notify the terminal B1702 that the terminal E1705 is now a terminal receiving beacons from the terminal B1702.

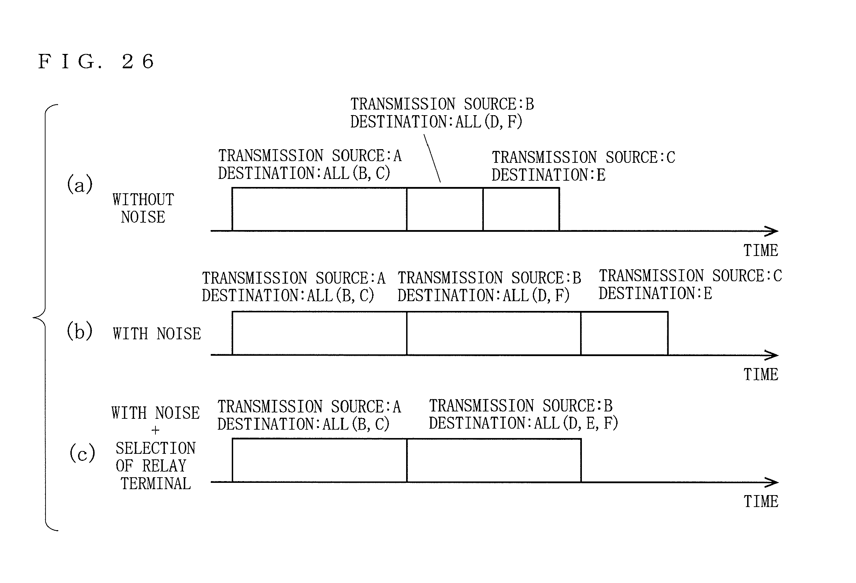

FIG. 26 shows, as a function of time, bands consumed by beacon packets in the whole network in various kinds of conditions of the second embodiment. When there is no noise, it is possible, by using a modulation having a high communication speed, to suppress the amount of the bands to be consumed (FIG. 26 (a)). When a noise has been generated, a modulation method having a lower communication speed has to be used, resulting in a greater band consumption (FIG. 26 (b)). Use of a modulation method having a lower communication speed increases the number of the possible terminals that can perform reception. However, it is possible, by selecting the terminal that is to be a relay destination, to obtain a similar effect to that in the case where a modulation method having a high communication speed is used, as shown in the second embodiment (FIG. 26 (c)).

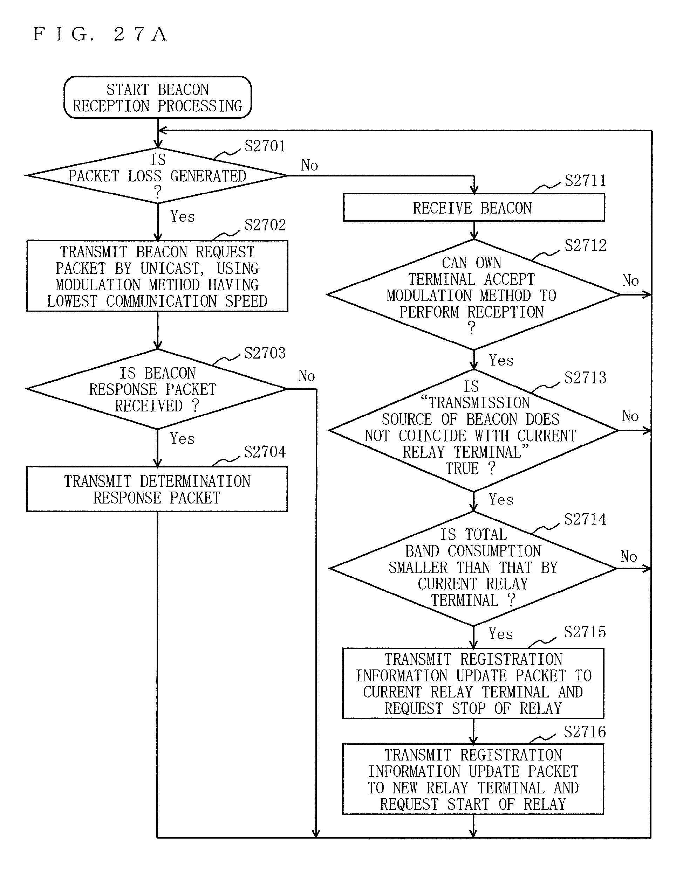

FIG. 27A is a flowchart showing beacon reception processing performed at each terminal in the second embodiment. Note that, since the beacon transmission processing performed at each terminal according to the present second embodiment is the same as the processing described with reference to FIG. 16 according to the first embodiment, the description thereof is omitted.

With reference to FIG. 27A, when having detected generation of a packet loss due to the noise, a terminal transmits a beacon request packet, using a modulation method having a lowest communication speed (steps S2701, S2702). Here, since not having received a beacon for a predetermined period of time, the terminal determines that a packet loss has been generated due to the noise. Note that, when the relay terminal is relaying a beacon, using a modulation method having a speed that is not the lowest speed, the terminal may transmit, by unicast, a beacon request packet to the address of the relay terminal, which is a destination. In response to that, when having succeeded in receiving a beacon response packet from the relay terminal (step S2703), which means communication is now possible, the terminal may transmit a determination response packet to the relay terminal (step S2704), so as to have the relay terminal continue to relay a beacon. Even when the terminal has failed in receiving a beacon response packet, if the terminal has succeeded in receiving a subsequent beacon from the relay terminal, the terminal has the relay terminal continue to relay a beacon. When the terminal has failed in receiving the subsequent beacon from the relay terminal, the terminal retransmits a beacon request packet.

On the other hand, when having received a beacon (step S2711), the terminal checks whether or not the terminal itself can accept the modulation method and receive the payload (step S2712). When the terminal cannot receive the payload, the processing returns to step S2701. When the terminal can receive the payload, if the beacon transmission source coincides with the current relay terminal, the processing returns to the ordinary beacon reception processing. When the beacon transmission source does not coincide with the current relay terminal (step S2713), it is determined which of the current relay terminal and the terminal being the beacon transmission source consumes fewer bands in total (step S2714).

When the communication speed used by the terminal being the transmission source of a beacon is compared with the communication speed used by the current relay terminal, and if the communication speed used by the terminal being the beacon transmission source is higher than the communication speed used by the current relay terminal, the beacon communication range provided by the terminal being the beacon transmission source is smaller. In such a case, if the terminal being the beacon transmission source is selected instead of the current relay terminal, it is possible to reduce the number of the beacon transmission bodies and to reduce the beacon communication ranges in the whole network. In this case, since it is determined that a relay performed by the terminal being the beacon transmission source consumes fewer bands in total than a relay performed by the current relay terminal, a registration information update packet is transmitted to the current relay terminal so as to request the current relay terminal to stop the relay (step S2715). Concurrently, a registration information update packet is transmitted to the terminal being the beacon transmission source so as to request the terminal being the beacon transmission source to become a new relay terminal and start a relay (step S2716). As a result, it is possible to effectively reduce the percentage of the bands consumed for transmission of beacons in the bands consumed for all the communication. Note that, the above determination may be made based on path information included in a beacon.

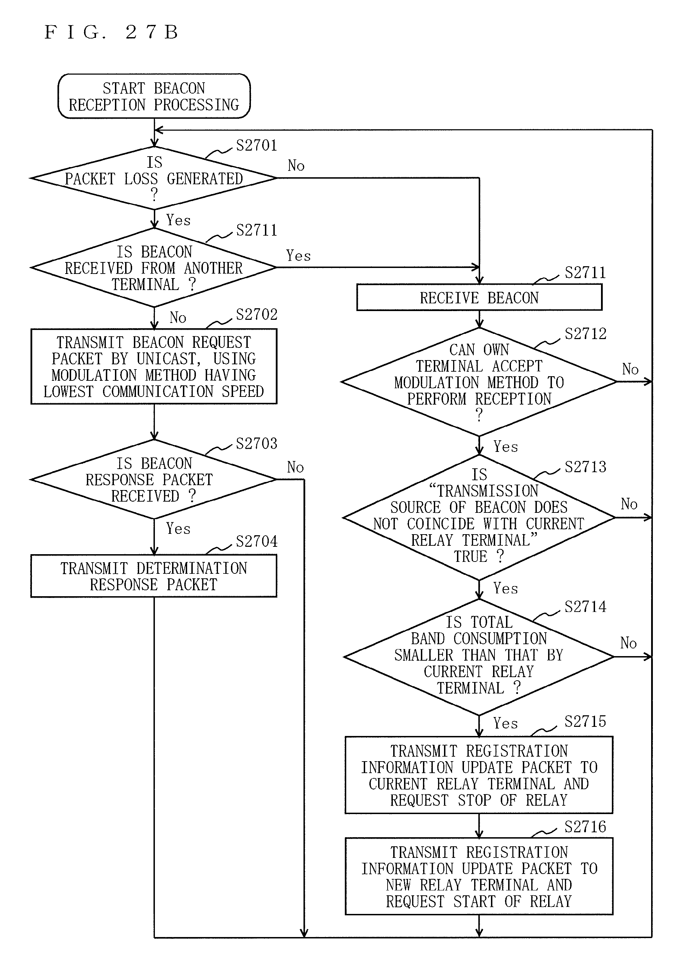

Further, the beacon reception processing performed at each terminal in the second embodiment may include operations shown in FIG. 27B, in addition to those shown in FIG. 27A.

FIG. 27B is a flowchart showing beacon reception processing performed at each terminal in the second embodiment. Note that, since the beacon transmission processing performed at each terminal according to the present second embodiment is the same as the processing described with reference to FIG. 16 according to the first embodiment, the description thereof is omitted.

With reference to FIG. 27B, a terminal determines whether or not a packet loss has been generated due to the noise (step S2701). When having determined that a packet loss has been generated due to the noise, the terminal determines whether or not the terminal has received beacons from other terminals (step S2711). When having detected that the terminal has not received beacons from other terminals, the terminal transmits, using a modulation method having a lowest communication speed, a beacon request packet (step S2702). Since subsequent operations are the same as those described with regard to FIG. 27A, the description thereof is omitted.

### (Third Embodiment)

In the first and second embodiments described above, description has been given on the cases where ff:ff:ff:ff:ff:ff is set as the relay destination address and the modulation method is adapted to a particular terminal. This method is effective in a case where modulation methods are divided into several levels, from low communication speed to high communication speed, and where a terminal can accept all the modulation methods that have a lower communication speed than the communication speed that allows the terminal itself to perform reception. However, when an adaptive modulation method (such as a modulation method, in OFDM, which is changed for each subcarrier) is used, the modulation method is adapted to two specific terminals, thereby enabling very high speed communication. Accordingly, the modulation method that is adapted to two specific terminals may consume fewer bands than a modulation method that allows communication among a plurality of terminals which are not specified.

Therefore, in the present third embodiment, description is given on operations to be performed in a case where reduction of the band consumption is achieved by combining two modulation methods: a transmission method in which ff:ff:ff:ff:ff:ff is set as the relay destination address and a modulation method having a lowest communication speed is used (hereinafter referred to as "broadcast"), and a transmission method in which the address of a specific terminal is set as the relay destination address and a modulation method having a highest communication speed is used between the relay source and the relay destination (hereinafter referred to as "unicast"). Note that, in unicast, a reception terminal returns to a transmission terminal an acknowledgment (hereinafter referred to as "ACK") that notifies the transmission terminal that data has normally been received, and therefore, when an ACK is not returned irrespective of repeated retransmissions, an occurrence of a packet loss is known.

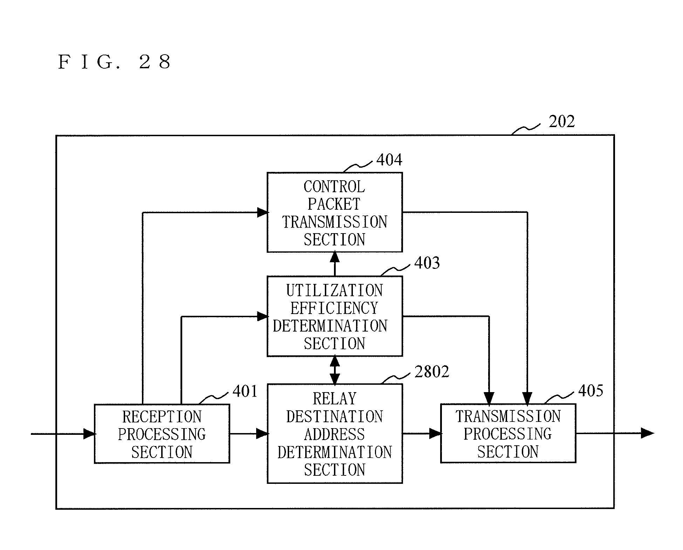

FIG. 28 is a functional block diagram illustrating functions according to the present third embodiment. Basically, FIG. 28 is the same as FIG. 4 of the first embodiment. The difference from the first embodiment is that in FIG. 28, a relay destination address determination section 2802 is provided instead of the modulation method determination section 402 provided in FIG. 4. In FIG. 28, the relay destination address determination section 2802 determines, based on data outputted from the utilization efficiency determination section 403, a relay destination address. A modulation method is automatically determined upon the determination of the relay destination address. Note that, the relay destination address determination section 2802 may be used in combination with the modulation method determination section 402 of the first embodiment.

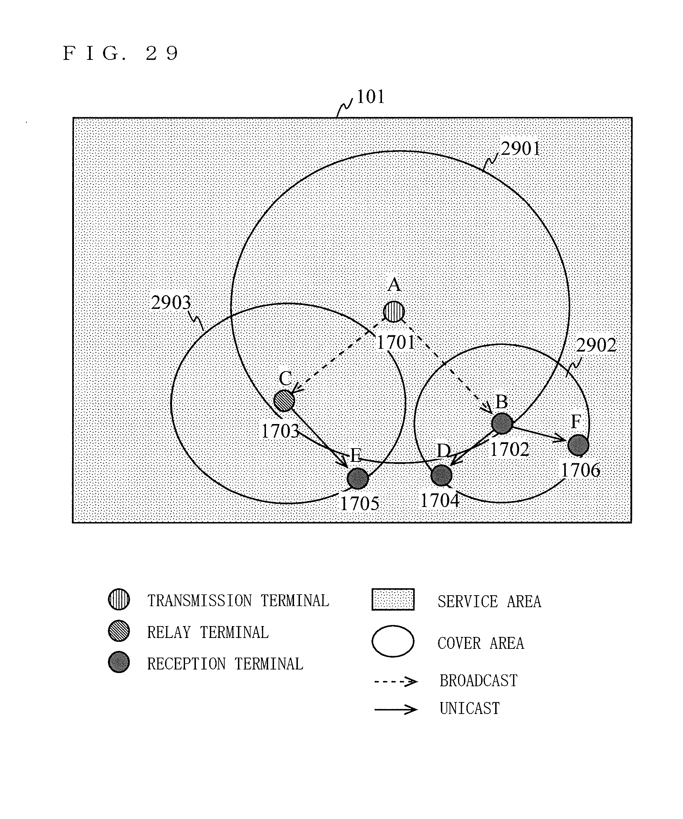

FIG. 29 is a network diagram illustrating a state before generation of a noise source. With reference to FIG. 29, the terminal A1701, which is a beacon transmission terminal, is transmitting a beacon, by broadcast. Each of the terminal B1702 and the terminal C1703 that exist in the cover area 2901, which allows communication, of the terminal A1701, is relaying the beacon, by unicast. The terminal B1702 is relaying the beacon toward the terminal D1704 and the terminal F1706. To the terminal D1704, the terminal B1702 is relaying the beacon, using a modulation method having the highest communication speed among the modulation methods that allows the terminal D1704 to receive the beacon. The same is performed with respect to the terminal F1706. The terminal C1703 is relaying the beacon toward the terminal E1705, using a modulation method having the highest communication speed among the modulation methods that allow the terminal E1705 to receive the beacon.

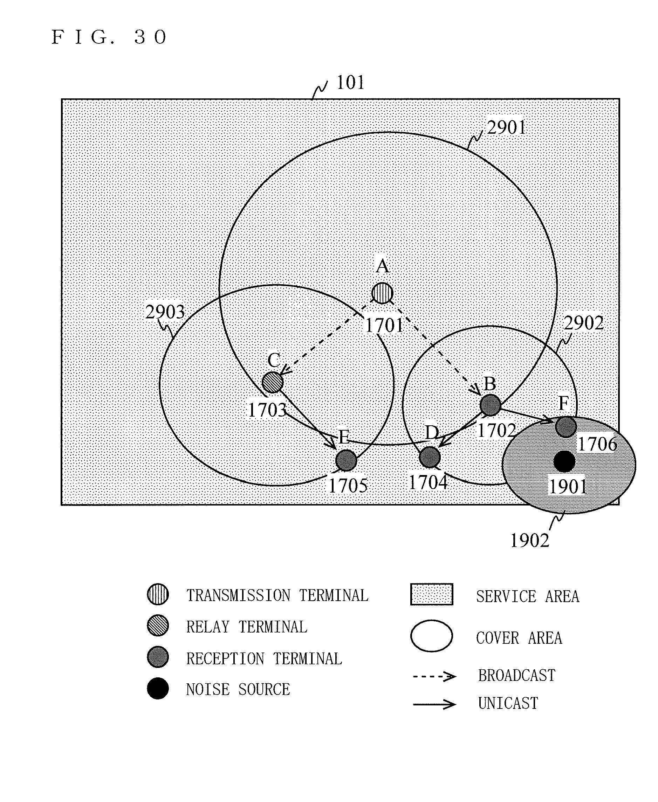

FIG. 30 is a network diagram illustrating a case after the entry of the noise source 1901 into the state of FIG.29, in the same manner as in FIG. 19. With reference to FIG. 30, in a case where the terminal B1702 has transmitted, by unicast, a beacon to the terminal F1706 and an ACK is not returned from the terminal F 1706, the terminal B 1702 retransmits a beacon to the terminal F1706. Further, in a case where the unicast transmission does not reach the terminal being the transmission destination (no ACK is returned irrespective of a plurality of times of transmissions that have been performed), the terminal B1702 redetermines, based on a CE request and a CE response, the optimum modulating speed. In a case where the total amount of the bands consumed by the unicast transmission to the terminal F 1706 and the terminal D 1704 is greater than the amount of the bands consumed by the broadcast transmission, the terminal B1702 changes the method of transmitting a beacon to the terminal D1704 and the terminal F1706, to broadcast.

In the present third embodiment, in a case where no ACK is returned irrespective of a plurality of unicast transmissions that have been performed, the optimum modulating speed is redetermined based on a CE request and a CE response. However, the present invention is not limited thereto, the above redetermination may be made in a case where an ACK in response to a beacon transmitted by unicast has not been returned for a predetermined period of time. Further, the same processing may also be performed when there is an entry of a new terminal. That is, the same processing may be performed in a case where fewer bands are consumed when a beacon is transmitted, by broadcast, by the terminal B1702 to three terminals of the terminal D 1704, the terminal F 1706 and a new terminal, than by unicast.

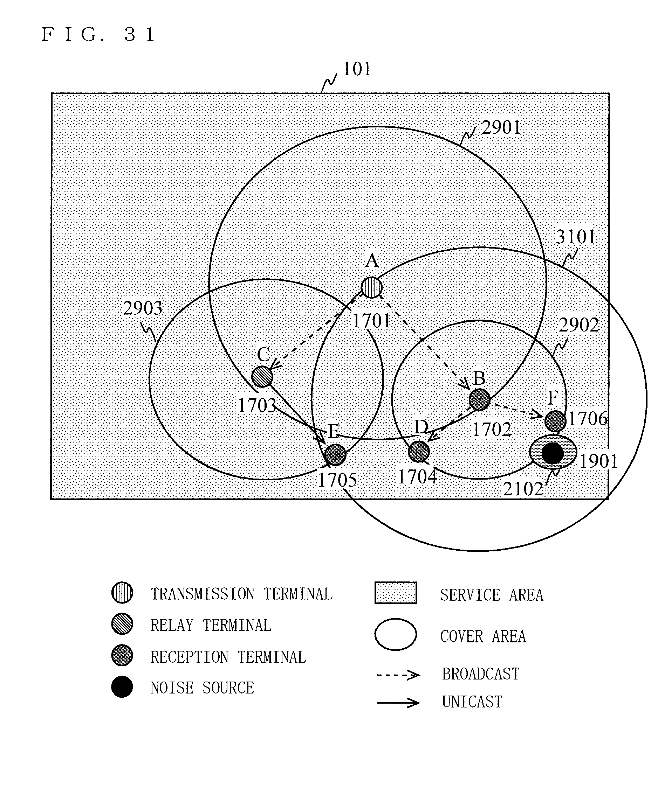

FIG. 31 is a network diagram illustrating a case where the terminal B1702 has changed the method of transmitting a beacon, to broadcast. With reference to FIG. 31, after the terminal B1702 has changed the method of transmitting a beacon, to broadcast, the cover area 2902 of the terminal B1702 is expanded to be the cover area 3101 since a modulation method having a lowest communication speed is used.

In this manner, in a case where the terminal B1702 transmits a beacon to the terminal F1706 by unicast, and does not receive, from the terminal F1706 a predetermined number of times or for a predetermined period of time, an ACK in response to the beacon, the terminal B1702 transmits a beacon to the terminal F1706 by broadcast, using a modulation method having the lowest communication speed among the modulation methods that can be used in the network. Thus, the beacon transmission terminal B1702 determines that the reception terminal F1706 cannot currently receive the beacon, expands the range which allows communication of the beacon, and retransmits a beacon in such a manner that the reception terminal F1706 can receive the beacon. Accordingly, the beacon reaches the reception terminal F1706, enabling the terminal B1702 to resume communication with the reception terminal F1706.

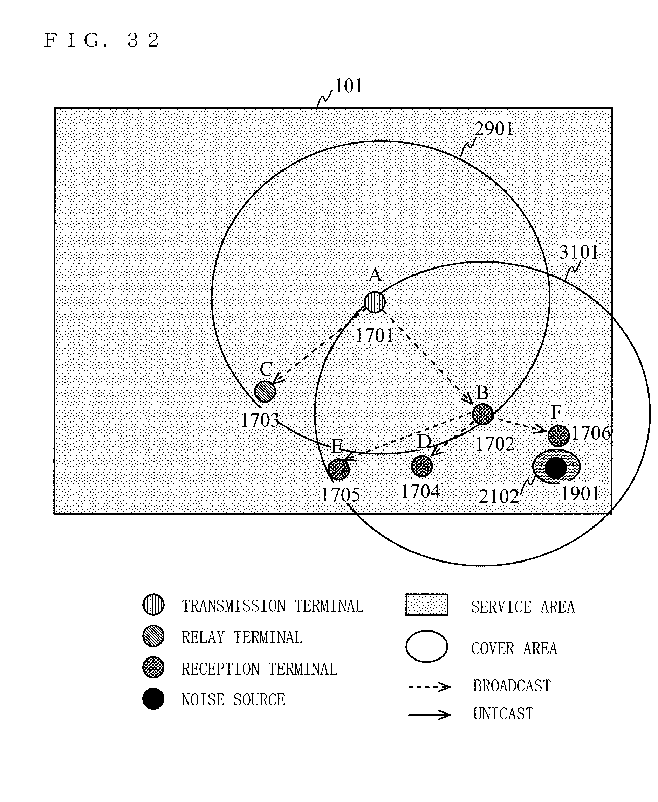

FIG. 32 is a network diagram illustrating a case where, because the terminal B1702 has switched the transmission method to broadcast and started transmission, the terminal E1705 has switched the beacon relay source, from the terminal C1703 to the terminal B1702. With reference to FIG. 32, because the cover area 2902 of the terminal B1702 has been expanded to be the cover area 3101, the terminal E1705 is included in both of the cover area 3101 of the terminal B1702 and the cover area 2903 of the terminal C1703. Accordingly, the terminal E1705 receives, by broadcast, a beacon from the terminal B1702, and receives, by unicast, a beacon from the terminal C1703. Here, if the terminal C1703 stops the unicast relay of a beacon to the terminal E1705, it is possible to suppress the band consumption in total. Therefore, in the present third embodiment, in a case where, during the time period when the terminal E1705 receives, by unicast, a beacon from the terminal C1703, the terminal E1705 receives, from the terminal B1702, a beacon modulated by using a modulation method having a lower communication speed than the communication speed used between the terminal E1705 and the terminal C1703, the terminal E1705 switches the beacon transmission source, from the terminal C 1703 to the terminal B 1702.

In a case of an existence of the terminal B1702 that transmits a beacon by broadcast, using a modulation method having a lower communication speed, the cover area 3101 of the terminal B1702 is larger than the cover area 2903 of the terminal C 1703. This allows many terminals to receive a beacon from the terminal B1702, and therefore, if the terminal B1702, which is the transmission source of a beacon that is received by more terminals, is selected, it is possible to reduce the number of the beacon transmission bodies. As a result, it is possible to effectively reduce the percentage of the bands consumed for transmission of control packets in the bands consumed for all the communication.

In a case where the beacon transmission source is switched from the terminal C 1703 to the terminal B1702, the control packet transmission section 404 in the terminal E 1705 notifies the terminal C1703 of the switching of the beacon transmission source. In a case where the terminal C1703 has been notified of the switching of the beacon transmission source and has no other beacon transmission destination than the terminal E1705, the terminal C1703 stops transmitting a beacon.

In this manner, in a case where the beacon transmission source is switched from the terminal C 1703 to the terminal B1702, when the terminal C 1703 is notified of the switching of the beacon transmission source, the terminal C 1703, which has been the beacon transmission source, may stop transmitting a beacon in accordance with the notification. Accordingly, it is possible to reduce the number of the beacon transmission bodies, and as a result, it is possible to effectively reduce the percentage of the bands consumed for transmission of beacons in the bands consumed for all the communication.

Further, when the terminal C1703 stops the unicast transmission of a beacon, the beacon cover area 2903 provided by the terminal C1703 disappears. Accordingly, the overlapping portion between the cover area 2903 of the terminal C1703 and the cover area 3101 of the terminal B1702 disappears, thereby enabling prevention of needless increase in the percentage of the bands consumed for transmission of beacons in the bands consumed for all the communication. As a result, it is possible to effectively secure the bands that are to be consumed for transmitting data intended to be transmitted.
Note that, this processing is the same as that of the second embodiment.

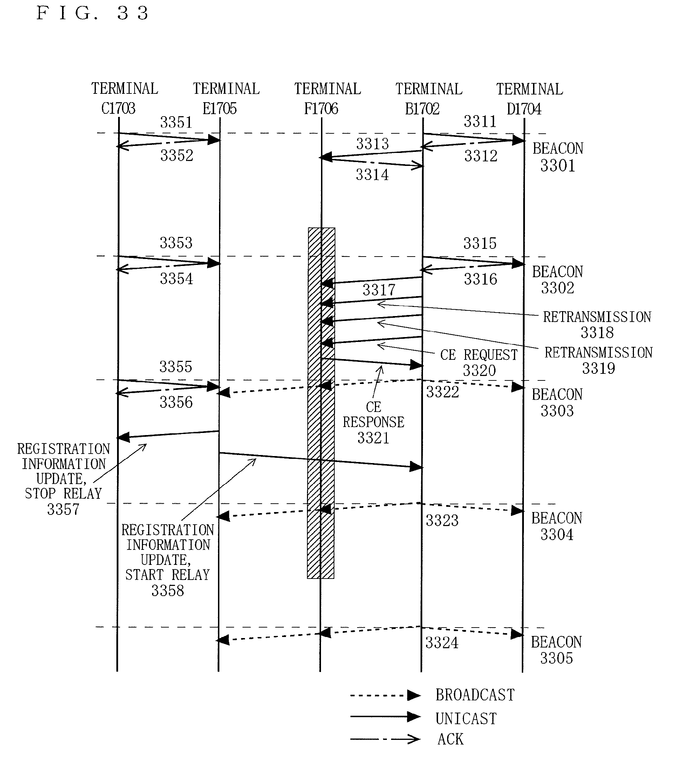

FIG. 33 is a sequence diagram illustrating a transition of the state from FIG. 29 to FIG. 32. With reference to FIG. 33, a beacon 3301 is transmitted, by unicast, from the terminal B1702 to the terminal D1704 and the terminal F1706, and is transmitted, by unicast, from the terminal C1703 to the terminal E1705. To packets 3311, 3313, and 3351, which have been transmitted by unicast, ACKs 3312, 3314, and 3352 have been returned, respectively, and the transmission has been completed normally.

Next, a beacon 3302 is transmitted, by unicast, from the terminal B1702 to the terminal D1704 and the terminal F1706, and is transmitted, by unicast, from the terminal C1703 to the terminal E1705. Here, to a packet 3315 and a packet 3353, an ACK 3316 and an ACK 3354 have been returned, respectively, and the transmission has been completed normally. However, to a packet 3317, an ACK has not been returned. Accordingly, a packet 3318 and a packet 3319 are retransmitted. When an ACK packet still cannot be received, the terminal B1702 determines that a packet cannot be communicated by using the modulation method.

In the present third embodiment, the noise source 1901 is generated. When having detected a change in the network, the terminal B1702 transmits a CE request 3320 to the terminal F1706 and receives a CE response 3321 from the terminal F1706, and researches a modulation method having the highest communication speed that allows communication in that state. Using the result, the terminal B1702 determines which is better, to transmit a beacon by using a plurality of unicasts or to transmit a beacon by broadcast. When having determined that it is better to transmit a beacon by broadcast, the terminal B1702 transmits a beacon 3303 by broadcast. Note that, the beacon 3302 has been transmitted, by unicast, from the terminal C1703 to the terminal E1705, by using a packet 3353. In contrast, an ACK packet 3354 has been returned from the terminal E 1705 to the terminal C 1703.

Next, a packet 3322 of the beacon 3303 transmitted by broadcast from the terminal B1702 is received not only by the terminal D1704 and the terminal F1706 but also by the terminal E1705. The terminal E1705 also receives a packet 3355 of the beacon 3303 transmitted by unicast from the terminal C 1703. The terminal E 1705 switches, using the same method as that in the second embodiment, the terminal from which the terminal E1705 receives a beacon, to the terminal B1702. That is, in a case where, during the time period when the terminal E1705 receives, by unicast, the packet 3355 of the beacon 3303 from the terminal C1703 and returns an ACK packet 3356 to the terminal C1703, the terminal E1705 receives, for example, by broadcast, from the terminal B1702, the packet 3322 of the beacon 3303 modulated by using a modulation method having a lower communication speed than the communication speed used between the terminal E1705 and the terminal C1703, the terminal E1705 switches the beacon transmission source, from the terminal C 1703 to the terminal B 1702.

In a case of an existence of the terminal B1702 that modulates the packet 3322 of the beacon 3303 by using a modulation method having a lower communication speed, the cover area 3101 of the terminal B1702 is larger than the cover area 2903 of the terminal C1703. Accordingly, since there are many terminals that can receive the packet 3322 of the beacon 3303 from the terminal B1702, if the terminal B1702, which is the transmission source of the packet 3322 of the beacon 3303 that is received by more terminals, is selected, it is possible to reduce the number of the beacon transmission bodies. As a result, it is possible to effectively reduce the percentage of the bands consumed for transmission of control packets in the bands consumed for all the communication.

The terminal E1705 transmits a registration information update packet 3358 toward the terminal C1703, and requests the terminal C1703 to start relaying a beacon. Accordingly, the terminal E1705 receives a packet 3323 of a beacon 3304, and a packet 3324 of a beacon 3305, only from the terminal B1702. Note that, beacons from the terminal B1702, as having been transmitted by broadcast, have already reached the terminal E1705. The reason why the terminal E1705 transmits to the terminal B1702 a registration information update packet 3358 and requests the terminal B1702 to start a relay is to notify the terminal B1702 that the terminal E1705 is now a terminal receiving beacons from the terminal B1702.

In a case where the beacon transmission source is switched from the terminal C 1703 to the terminal B1702, the control packet transmission section 404 in the terminal E 1705 notifies the terminal C1703 of the switching of the beacon transmission source, using a registration information update packet 3357. In a case where the terminal C1703 has been notified of the switching of the beacon transmission source and has no other beacon transmission destination than the terminal E1705, the terminal C1703 stops transmitting the beacon 3303.

Subsequently, the packet 3323 of the beacon 3304 and the packet 3324 of the beacon 3305 that are transmitted, by broadcast, from the terminal B1702 reach the terminal D1704, the terminal E1705, and the terminal F1706.

In this manner, in a case where the beacon transmission source is switched from the terminal C 1703 to the terminal B1702, when the terminal C 1703 is notified of the switching of the beacon transmission source, the terminal C 1703, which has been the beacon transmission source, may stop transmitting a beacon in accordance with the notification. Accordingly, it is possible to reduce the number of the beacon transmission bodies, and as a result, it is possible to effectively reduce the percentage of the bands consumed for transmission of beacons in the bands consumed for all the communication.

Further, when the terminal C1703 stops transmitting a beacon, the beacon cover area 2903 provided by the terminal C1703 disappears. Accordingly, the overlapping portion between the cover area 2903 of the terminal C1703 and the cover area 3101 of the terminal B1702 disappears, thereby enabling prevention of needless increase in the percentage of the bands consumed for transmission of beacons in the bands consumed for all the communication. As a result, it is possible to effectively secure the bands that are to be consumed for transmitting data intended to be transmitted.

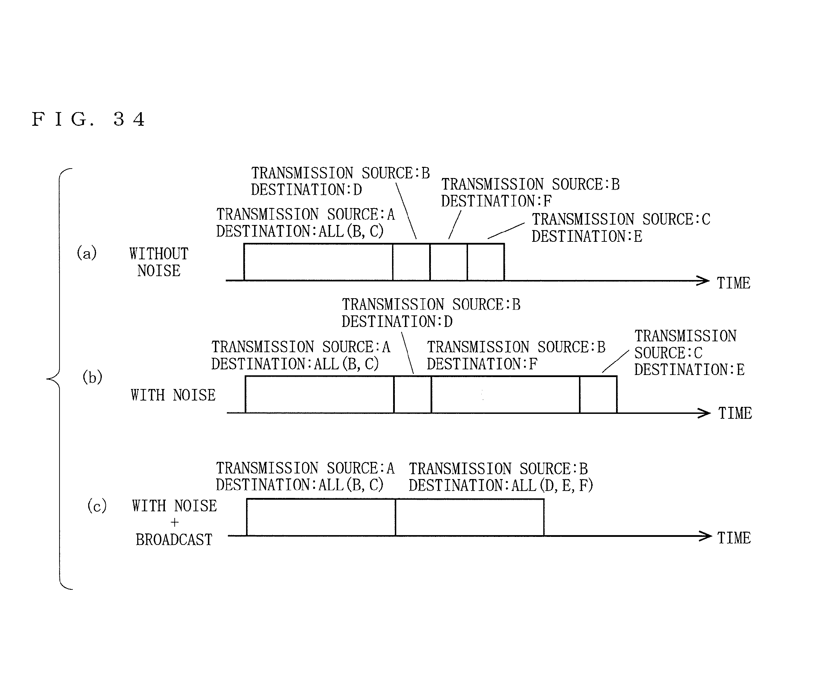

FIG. 34 shows, as a function of time, bands consumed by beacon packets in the network in various conditions of the third embodiment. When there is no noise, it is possible to suppress the amount of the bands to be consumed, by employing, between terminals, unicast that uses a modulation method having a highest communication speed that can be used between the terminals (FIG. 34 (a)). In a case where a noise has been generated, although it is possible to employ unicast that uses a modulation method having a low communication speed (FIG. 34 (b)), it is more efficient, in the present third embodiment, to employ broadcast so as to increase the number of terminals that can perform reception (FIG. 34 (c)).

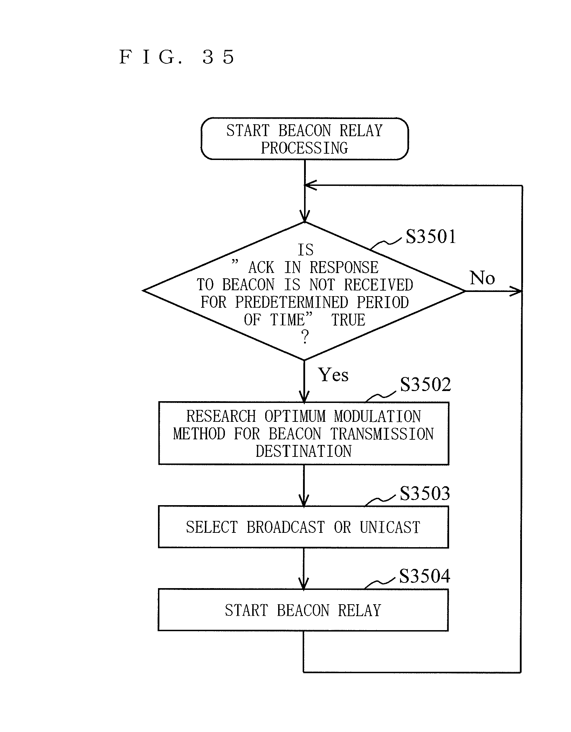

FIG. 35 is a flowchart showing a beacon transmission processing performed at each terminal in the third embodiment. Note that, since the beacon reception processing performed at each terminal according to the present third embodiment is the same as the processing described with reference to FIG. 27 according to the second embodiment, the description thereof is omitted. Specifically, processing to be performed by the terminal E1705 in a case where the terminal E1705 is included, due to the expansion of the cover area of terminal B 1702, in both of the cover area 3101 of the terminal B 1702 and the cover area 2903 of the terminal C1703, is the same as the processing of the steps S2711 to S2716 shown in FIGS. 27A and B.

First, a relay terminal is transmitting, by unicast, a beacon to a reception terminal. When having failed in receiving, a predetermined number of times or for a predetermined period of time, an ACK in response to the beacon, the relay terminal determines that the beacon cannot be relayed by using the current modulation method (step S3501). Next, the relay terminal researches the optimum modulation method for the beacon transmission destination, using a CE request and a CE response (step S3502). Based on the research result, the relay terminal determines which one, unicast or broadcast, achieves the least band consumption in total (step S3503). In accordance with the determination result, the relay terminal starts relaying a beacon (step S3504).

In this manner, in a case where the relay terminal transmits a beacon to the reception terminal by unicast, and does not receive, from the reception terminal a predetermined number of times or for a predetermined period of time, an ACK in response to the beacon, the relay terminal transmits a beacon to the reception terminal, using a modulation method having the lowest communication speed among the modulation methods that can be used in the network. In this manner, the relay terminal that transmits a beacon determines that the reception terminal cannot currently receive the beacon, expands the range that allows communication of the beacon, and retransmits a beacon in such a manner that the reception terminal can receive the beacon. As a result, the beacon reaches the reception terminal, enabling the relay terminal to resume communication with the reception terminal.

### Industrial Applicability

According to the present invention, it is possible to provide a communication terminal device, a communication method, and the like that are able to greatly reduce, in an ad hoc network using a power line, the percentage of the bands consumed for transmission of control packets in the bands consumed for all the communication and are able to ensure the transmission of data intended to be transmitted.

### Reference Signs List

- 101: service area
- 102 to 110, 501 to 505, 701, 1701 to 1706: terminal
- 201: memory
- 202: CPU
- 203: network interface
- 301: PHY header
- 302: MAC header
- 303: payload
- 401: reception processing section
- 402: modulation method determination section
- 403: utilization efficiency determination section
- 404: control packet transmission section
- 405: transmission processing section
- 506 to 508, 901, 1707 to 1709,:
- 2101, 2901 to 2903, 3101: cover area
- 1301 to 1303, 2501 to 2504,:
- 3301 to 3305: beacon
- 1304 to 1310, 2511 to 2517,:
- 3311 to 3324, 3351 to 3358: packet
- 1901: noise source
- 1902, 2102: loss area
- 2802: relay destination address determination section

## Claims

1. A communication terminal device comprising:
a communication section connected to a network of power line communication;
and
a control section that modulates, in a case where a control packet to be used for setting a communication path to a terminal on the network is not received from the network for a predetermined period of time, a request packet for the control packet, using a modulation method having a lowest communication speed among a plurality of modulation methods that can be used in the network, and transmits the modulated request packet to the network.

2. The communication terminal device according to claim 1, wherein the case where the control packet is not received from the network for a predetermined period of time includes a time of a startup.

3. The communication terminal device according to claim 1, wherein the control section receives, from a first terminal that has responded to the modulated request packet, a control packet that has been modulated by using a modulation method having a highest communication speed that can be used between the communication terminal device and the first terminal.

4. The communication terminal device according to claim 3, wherein in a case where, during a time period when the control packet is received from the first terminal, a control packet that has been modulated by using a modulation method having a different communication speed than the modulation method having the highest communication speed that can be used between the communication terminal device and the first terminal, is received from a second terminal, the control section switches a transmission source of the control packet, from the first terminal to the second terminal.

5. The communication terminal device according to claim 4, wherein when switching the transmission source of the control packet, from the first terminal to the second terminal, the control section notifies the first terminal of the switching of the transmission source of the control packet.

6. The communication terminal device according to claim 5, wherein in a case where the first terminal is notified of the switching of the transmission source of the control packet and has another terminal being a transmission destination of the control packet, the first terminal modulates the control packet, using a modulation method having a highest communication speed that can be used between the first terminal and said another terminal, and transmits the modulated control packet to said another terminal.

7. The communication terminal device according to claim 5, wherein in a case where the first terminal is notified of the switching of the transmission source of the control packet and has no other terminal being a transmission destination of the control packet, the first terminal stops transmitting the control packet.

8. The communication terminal device according to claim 1, wherein in a case where after the control packet is received from the second terminal, a control packet is not received for a predetermined period of time, the control section modulates a request packet, using the modulation method having the lowest communication speed among the plurality of modulation methods that can be used in the network, and transmits the modulated request packet to the network.

9. The communication terminal device according to claim 1, wherein information about the communication path to the terminal on the network includes at least one of:
information indicating a relay device; path information indicating which path via the relay device allows a connection to a master device; and path information indicating which path via the relay device allows a connection to another terminal on the network.

10. The communication terminal device according to claim 3, wherein
the control packet that has been modulated by using the modulation method having the lowest communication speed among the modulation methods that can be used in the network is a broadcast packet, and
the control packet that has been modulated by using the modulation method having the highest communication speed that can be used between the communication terminal device and the first terminal is a unicast packet.

11. The communication terminal device according to claim 4, wherein
the control packet that has been modulated by using the modulation method having the highest communication speed that can be used between the communication terminal device and the first terminal is a broadcast packet, and
the control packet that has been modulated by using the modulation method having the lower communication speed than the modulation method having the highest communication speed that can be used between the communication terminal device and the first terminal, the control packet being received from the second terminal, is a broadcast packet.

12. The communication terminal device according to claim 4, wherein
the control packet that has been modulated by using the modulation method having the highest communication speed that can be used between the communication terminal device and the first terminal is a unicast packet; and
the control packet that has been modulated by using the modulation method having the lower communication speed than the modulation method having the highest communication speed that can be used between the communication terminal device and the first terminal, the control packet being received from the second terminal, is a broadcast packet.

13. A communication terminal device comprising:
a communication section that transmits, to a terminal connected to a network of power line communication, a control packet to be used for setting a communication path to the terminal; and
a control section that modulates, in a case where a response to the control packet is not received from the terminal for a predetermined period of time, the control packet, using a modulation method having a lowest communication speed among a plurality of modulation methods that can be used in the network, and transmits the modulated control packet to the terminal.

14. The communication terminal device according to claim 13, wherein
the communication section transmits, by unicast, the control packet to the terminal; and
in a case where the response to the control packet is not received from the terminal for a predetermined period of time, the control section modulates the control packet, using the modulation method having the lowest communication speed among the plurality of modulation methods that can be used in the network, and transmits, by broadcast, the modulated control packet to the terminal.

15. The communication terminal device according to claim 13, wherein the case where the response to the control packet is not received from the terminal for a predetermined period of time includes a case where the control section does not receive, from the terminal, a response to the control packet a predetermined number of times.

16. A communication method comprising: modulating, in a case where a control packet to be used for setting a communication path to a terminal connected to a network of power line communication is not received from the network for a predetermined period of time, a request packet for the control packet, using a modulation method having a lowest communication speed among a plurality of modulation methods that can be used in the network; and transmitting the modulated request packet to the network.

## Amended claims

### Amended claims under Art. 19.1 PCT

1. (Amended) A communication terminal device comprising:
a communication section connected to a network of power line communication;
and
a control section that modulates, in a case where a control packet to be used for setting a communication path to a terminal on the network is not received from the network for a predetermined period of time, a request packet for the control packet, using a modulation method having a lowest communication speed among a plurality of modulation methods that can be used in the network, and transmits the modulated request packet to the network, wherein
the control section receives, from a first terminal that has responded to the modulated request packet, a control packet that has been modulated by using a modulation method having a highest communication speed that can be used between the communication terminal device and the first terminal.

2. The communication terminal device according to claim 1, wherein the case where the control packet is not received from the network for a predetermined period of time includes a time of a startup.

3. (Canceled)

4. (Amended) The communication terminal device according to claim 1, wherein in a case where, during a time period when the control packet is received from the first terminal, a control packet that has been modulated by using a modulation method having a different communication speed than the modulation method having the highest communication speed that can be used between the communication terminal device and the first terminal, is received from a second terminal, the control section switches a transmission source of the control packet, from the first terminal to the second terminal.

5. The communication terminal device according to claim 4, wherein when switching the transmission source of the control packet, from the first terminal to the second terminal, the control section notifies the first terminal of the switching of the transmission source of the control packet.

6. The communication terminal device according to claim 5, wherein in a case where the first terminal is notified of the switching of the transmission source of the control packet and has another terminal being a transmission destination of the control packet, the first terminal modulates the control packet, using a modulation method having a highest communication speed that can be used between the first terminal and said another terminal, and transmits the modulated control packet to said another terminal.

7. The communication terminal device according to claim 5, wherein in a case where the first terminal is notified of the switching of the transmission source of the control packet and has no other terminal being a transmission destination of the control packet, the first terminal stops transmitting the control packet.

8. (Amended) The communication terminal device according to claim 1, wherein in a case where after the control packet is received from a second terminal, a control packet is not received for a predetermined period of time, the control section modulates a request packet, using the modulation method having the lowest communication speed among the plurality of modulation methods that can be used in the network, and transmits the modulated request packet to the network.

9. The communication terminal device according to claim 1, wherein information about the communication path to the terminal on the network includes at least one of: information indicating a relay device; path information indicating which path via the relay device allows a connection to a master device; and path information indicating which path via the relay device allows a connection to another terminal on the network.

10. (Amended) The communication terminal device according to claim 1, wherein
the control packet that has been modulated by using the modulation method having the lowest communication speed among the modulation methods that can be used in the network is a broadcast packet, and
the control packet that has been modulated by using the modulation method having the highest communication speed that can be used between the communication terminal device and the first terminal is a unicast packet.

11. The communication terminal device according to claim 4, wherein
the control packet that has been modulated by using the modulation method having the highest communication speed that can be used between the communication terminal device and the first terminal is a broadcast packet, and
the control packet that has been modulated by using the modulation method having the lower communication speed than the modulation method having the highest communication speed that can be used between the communication terminal device and the first terminal, the control packet being received from the second terminal, is a broadcast packet.

12. The communication terminal device according to claim 4 wherein,
the control packet that has been modulated by using the modulation method having the highest communication speed that can be used between the communication terminal device and the first terminal is a unicast packet; and
the control packet that has been modulated by using the modulation method having the lower communication speed than the modulation method having the highest communication speed that can be used between the communication terminal device and the first terminal, the control packet being received from the second terminal, is a broadcast packet.

13. (Amended) A communication terminal device comprising:
a communication section that modulates a control packet to be used for setting a communication path to a terminal connected to a network of power line communication, using a modulation method having a communication speed that is not a lowest communication speed among a plurality of modulation methods that can be used in the network, and transmits the modulated control packet to the terminal; and
a control section that modulates, in a case where a response to the control packet is not received from the terminal for a predetermined period of time, the control packet, using a modulation method having the lowest communication speed among the plurality of modulation methods that can be used in the network, and transmits the modulated control packet to the terminal.

14. The communication terminal device according to claim 13, wherein
the communication section transmits, by unicast, the control packet to the terminal; and
in a case where the response to the control packet is not received from the terminal for a predetermined period of time, the control section modulates the control packet, using the modulation method having the lowest communication speed among the plurality of modulation methods that can be used in the network, and transmits, by broadcast, the modulated control packet to the terminal.

15. The communication terminal device according to claim 13, wherein the case where the response to the control packet is not received from the terminal for a predetermined period of time includes a case where the control section does not receive, from the terminal, a response to the control packet a predetermined number of times.

16. (Amended) A communication method comprising:
modulating, in a case where a control packet to be used for setting a communication path to a terminal connected to a network of power line communication is not received from the network for a predetermined period of time, a request packet for the control packet by using a modulation method having a lowest communication speed among a plurality of modulation methods that can be used in the network, and transmitting the modulated request packet to the network; and
receiving, from a first terminal that has responded to the modulated request packet, a control packet that has been modulated by using a modulation method having a highest communication speed that can be used between a communication terminal device and the first terminal.
